# EUROPÄISCHE PATENTSCHRIFT

(11) **EP 2 434 359 B1**
(45) Veröffentlichungstag und Bekanntmachung des Hinweises auf die Patenterteilung: **14.11.2012**
(21) Anmeldenummer: 11182848.9
(22) Anmeldetag: 27.09.2011
(51) Int. Cl.: G05B 19/4093

(54) **Verfahren zum Herstellen eines eine Pfeilverzahnung aufweisenden Zahnrads und Verfahren und Vorrichtung zum Erzeugen von Steuerdaten zur Ausbildung einer Pfeilverzahnung auf einem Werkstück**
Method for producing a cogged wheel with herringbone gearing and method and device for generating control data for forming herringbone gearing on a workpiece
Procédé de fabrication d'une roue dentée comprenant une denture à chevrons ainsi que procédé et dispositif destinés à la production de données de commande pour la formation d'une denture à chevrons sur une pièce usinée

(30) Priorität: 27.09.2010 DE 102010041489
(43) Veröffentlichungstag der Anmeldung: 28.03.2012
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT); Hansen, Uwe-Carsten, 87637 Eisenberg (DE)
(74) Vertreter: MERH-IP Matias Erny Reichl Hoffmann

(56) Entgegenhaltungen:
- EP-A1- 1 792 682
- EP-A2- 2 221 693

## Beschreibung

Die vorliegende Erfindung betrifft ein Verfahren zum Herstellen eines eine Pfeilverzahnung aufweisenden Zahnrads mittels fräsender Bearbeitung eines Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, insbesondere einem Schaftfräser, der Werkzeugmaschine auf Grundlage von Steuerdaten, umfassend Erzeugen der Steuerdaten auf Grundlage einer Zahnflankengeometrie, wobei die Steuerdaten Bahndaten zum Steuern des Fräswerkzeugs der Werkzeugmaschine entlang von Bearbeitungsbahnen angeben, und fräsendes Bearbeiten des Werkstücks an der Werkzeugmaschine mit dem Fräswerkzeug auf Grundlage der erzeugten Steuerdaten, wobei das Fräswerkzeug sukzessive entlang der von den Bahndaten angegebenen Bearbeitungsbahnen gesteuert wird.

Weiterhin betrifft die vorliegende Erfindung Verfahren und eine Vorrichtung zum Erzeugen von Steuerdaten zur Ausbildung einer Pfeilverzahnung auf einem Werkstück gemäß eines vorstehend beschriebenen Herstellungsverfahrens durch fräsende Bearbeitung des Werkstücks an einer zumindest 4 Achsen umfassenden, numerisch gesteuerten Werkzeugmaschine durch sukzessives Abfahren von Bearbeitungsbahnen relativ zu dem Werkstück mit einem Fräswerkzeug der Werkzeugmaschine auf Grundlage der Steuerdaten.

Weiterhin betrifft die vorliegende Erfindung ein numerisch gesteuerte, zumindest 4 Achsen umfassende Werkzeugmaschine, insbesondere Fräsmaschine, Universal-Werkzeugmaschine oder Bearbeitungszentrum, zum fräsenden Bearbeiten eines Werkstücks durch sukzessives Abfahren von Bearbeitungsbahnen mit einem Fräswerkzeug, insbesondere Schaftfräser, der Werkzeugmaschine auf Grundlage von erzeugten Steuerdaten, umfassend eine Vorrichtung zum Erzeugen von Steuerdaten und weiterhin betrifft die vorliegende Erfindung ein Computerprogrammprodukt, das ein computerlesbares Medium und ein darin gespeichertes Computerprogramm mit Befehlen umfasst, wobei das Computerprogramm von einem Datenverarbeitungsmittel einer Datenverarbeitungseinrichtung derart verarbeitet werden kann, dass eine Vorrichtung zum Erzeugen von Steuerdaten gebildet wird.

### Hintergrund der Erfindung

Im Stand der Technik ist es herkömmlich bekannt, Zahnräder oder andere eine Verzahnung aufweisende Werkstücke an speziellen verzahnungsbildenden Werkzeugmaschinen zu fertigen, d.h. auf speziellen Einzweckmaschinen. Zum Beispiel sind spezielle Wälzfräsmaschinen bekannt, an denen ein Zahnprofil an einem Werkstück herausgearbeitet wird, indem ein Profilwälzfräser oder eine Profilschleifscheibe derart gesteuert wird, dass Zahnflanken bzw. Zähne in dem Werkstück herausgearbeitet werden. Hierbei weisen die Wälzfräswerkzeuge oder Profilscheiben bereits im Querschnitt eine Form entsprechend der gewünschten Profilform der zu fertigenden Zahnflanken auf dem Werkstück auf. Indem das Wälzfräswerkzeug oder die Profilscheibe entlang einer Bahn durch das Werkstück gesteuert wird, entsteht hierbei eine oder zwei gegenüberliegenden Zahnflanken, die das Profil entsprechend der Form des Werkzeugs aufweisen.

Wird ein eine Pfeilverzahnung aufweisendes Zahnrad, insbesondere ein Zahnrad mit einer linkssteigenden und einer rechtssteigenden Schrägverzahnung (auch Doppelschrägverzahnung genannt) an derartigen Einzweckmaschinen mittels Profilscheiben oder Profilwälzfräsern hergestellt, muss zuerst ein oder mehrere Zahnprofile der einen Schrägverzahnung in einem ersten Arbeitsschritt herausgearbeitet werden, woraufhin ein oder mehrere Zahnprofile der anderen, die entgegengesetzte Steigung aufweisende Schrägverzahnung in einem weiteren Arbeitsschritt herausgearbeitet werden können. Dies führt zu einem aufwendigen und zeitintensiven Herstellungsverfahren des die Pfeilverzahnung aufweisenden Zahnrads. Zudem können die Zähne der Pfeilverzahnung bei den herkömmlichen Verfahren an Einzweckmaschinen mittels Profilwälzfräser oder Profilschleifscheibe nicht durchgängig herausgearbeitet werden, da ein Herausarbeiten eines Zahns der einen Schrägverzahnung mit einem Profilwälzfräser oder einer Profilschleifscheibe bis hin zur Mitte der Pfeilverzahnung bereits in eine Zahnflanke eines Zahns der anderen Schrägverzahnung hinein fräsen bzw. hinein schleifen würde. Aus diesem Grund wird bei einer Herstellung eines Zahnrads mit Pfeilverzahnung mittels eines Profilwälzfräsers oder einer Profilschleifscheibe ein Werkstück mit einer mittigen Nut verwendet, die die beiden Schrägverzahnungen der Pfeilverzahnung voneinander trennt.

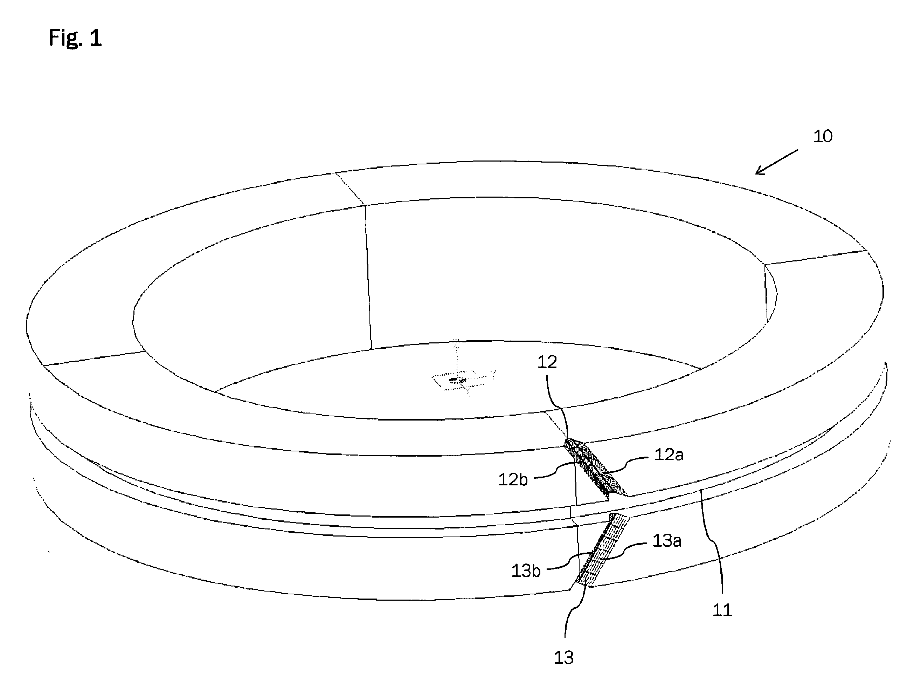

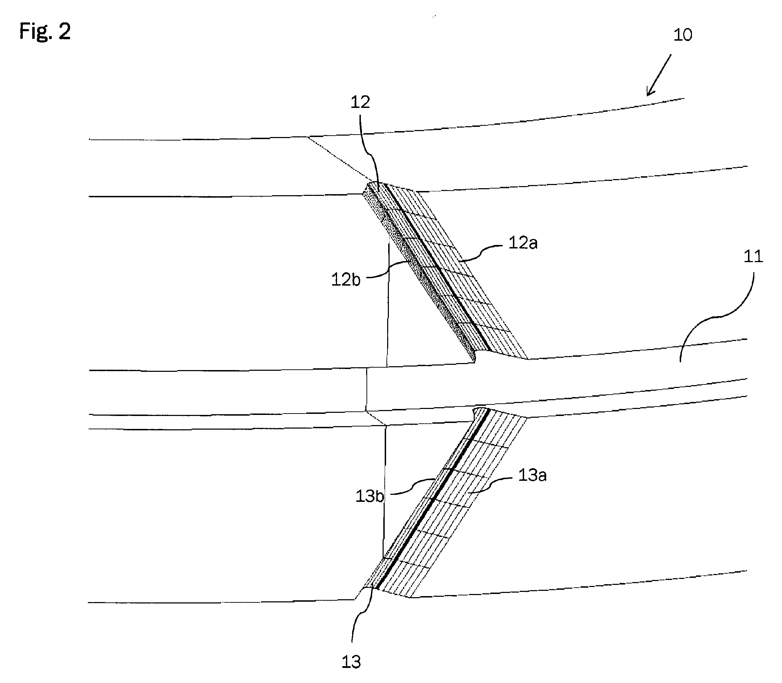

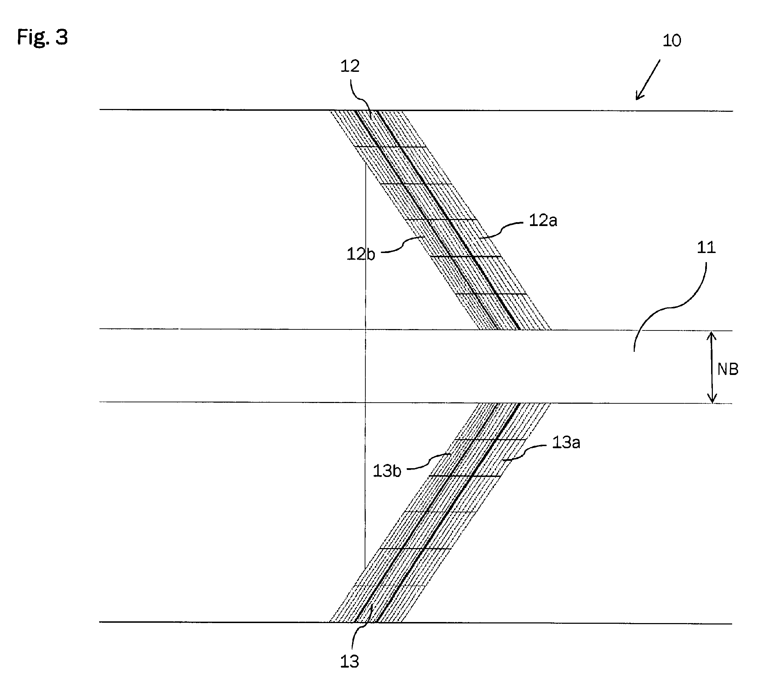

Dies ist beispielhaft in Fig. 1 dargestellt, die eine Perspektivansicht eines Werkstücks 10 zeigt, das eine mittige, das rotationssymmetrische Werkstück umlaufende Nut 11 aufweist. Das Werkstück 10 weist zudem bereits einen Zahnzwischenraum 12 der einen Schrägverzahnung und einen Zahnzwischenraum 13 der anderen Schrägverzahnung auf. Die gegenüberliegenden Zahnflanken 12a und 12b des Zahnzwischenraums 12 sind von den Zahnflanken 13a und 13b des Zahnzwischenraums 13 durch die Mittelnut 11 getrennt. Dies verhindert, dass ein Profilwälzfräser oder eine Profilschleifscheibe beim Herausarbeiten der Zahnzwischenräume 12 und 13 in eine Zahnflanke des jeweils anderen Zahnzwischenraums hinein fräst bzw. hinein schleift. Fig. 2 zeigt beispielhaft eine Detailansicht der Zahnzwischenräume 12 und 13 aus Fig. 1. Fig. 3 zeigt beispielhaft eine Draufsicht auf die Zahnzwischenräume 12 und 13 aus Fig. 1. Wie in Fig. 3 gezeigt weisen die beiden Schrägverzahnungen der Pfeilverzahnung entgegengesetzte Steigungen bei gleichem Schrägungswinkel auf. Die Nut 11 weist eine Nutbreite NB auf. Bei dem fertigen Zahnrad sind somit Zähne der beiden Schrägverzahnungen der Pfeilverzahnung in der Spitze der Pfeilverzahnungjeweils durch die Nut 11 mit der Nutbreite NB getrennt. Beim Abrollen zweier Zahnräder treten hierbei jedoch gerade an den Außenseiten der Flanken 12a, 12b, 13a und 13b an der Außenseite und insbesondere an den der Nut 11 zugewandten Rändern der Zahnflanken 12a, 12b, 13a und 13b hohe Belastungen und Spannungen im Material auf. Dies führt zu einer reduzierten Belastbarkeit des Zahnrads beim Abrollen mit einem Zahnrad mit Gegenflanken unter Last.

Die vorliegende Erfindung betrifft nun jedoch eine neu entwickelte Methode zur Herstellung von eine Verzahnung aufweisenden Werkstücken an numerisch gesteuerten, zumindest 5 Achsen umfassenden Universal-Werkzeugmaschinen, wie zum Beispiel einer Fräsmaschine, einer Universalfräsmaschine oder einem Bearbeitungszentrum, bei der die Verzahnung auf dem Werkstück durch Standard-Fräswerkzeuge, wie zum Beispiel Schaftfräser mit oder ohne Endradius in einer abzeilenden Bearbeitung durch sukzessives Abfahren von Bearbeitungsbahnen eine Zahnflanke aus dem Werkstück herausgearbeitet wird. Im Gegensatz zu der Fertigung von eine Verzahnung aufweisenden Werkstücken an den vorstehend bekannten, herkömmlich benutzten verzahnungsbildenden Einzweckmaschinen ist die Erfindung auf das Ausbilden einer Verzahnung auf einem Werkstück auf Universal-Werkzeugmaschinen, wie z.B. einer Fräsmaschine, einer Universalfräsmaschine oder einem Bearbeitungszentrum, gerichtet.

Eine derartige Herstellung eines eine Verzahnung aufweisenden Werkstücks an einer Universal-Werkzeugmaschine wird zum Beispiel in dem Artikel "Auf einfachem Weg zu guten Zähnen - Zahnräder mit hoher Qualität auf Standardmaschinen fräsen" von Hans-Peter Schossig (erschienen in der Zeitschrift WERKSTATT UND BETRIEB, im Carl Hanser Verlag, München, Ausgabe 2007, Nr. 4/28, auf den Seiten 28 bis 32, ISSN 0043-2792) und der WO 2008/133517 A1 beschrieben. Ausgangspunkt der vorliegenden Erfindung ist diese neu entwickelte Methode und deren Weiterentwicklungen, die von der Anmelderin selbst entwickelt wurden (siehe zum Beispiel DE 10 2009 008 124).

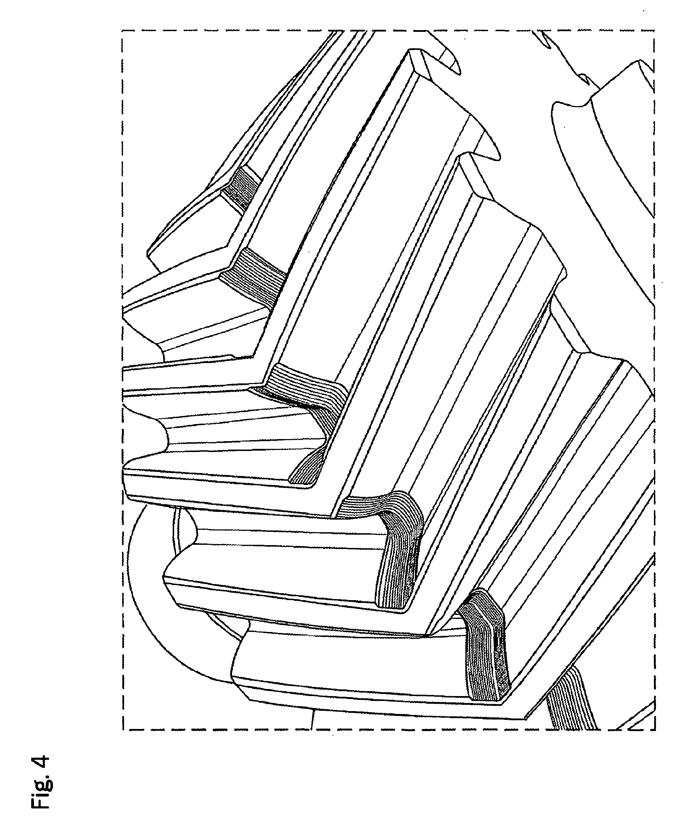

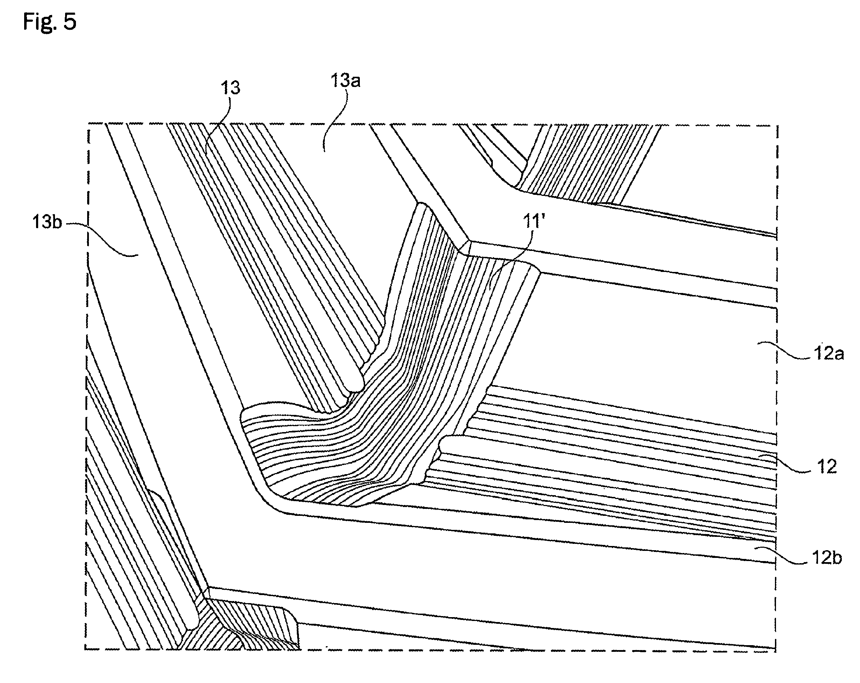

Im Hinblick auf die vorstehend beschriebenen Nachteile der Herstellung eines Zahnrads mit Pfeilverzahnung an Einzweckmaschinen mittels eines Profilwälzfräsers oder einer Profilwälzscheibe wurde erkannt, dass die Belastbarkeit eines Zahnrads mit Pfeilverzahnung erheblich verbessert werden kann, indem die Zähne der einen Schrägverzahnung nicht durch eine Mittelnut von den Zähnen der anderen Schrägverzahnung getrennt sind sondern durchgängig aus dem Werkstück herausgearbeitet werden. Es wurde weiterhin erkannt, dass dies durch die neuentwickelte Methode des Herausarbeitens von Zahnflanken mittels eines Fräswerkzeugs, insbesondere eines Schaftfräsers, an einer Universalmaschine wie z.B. einer Fräsmaschine, einer Universal-Fräsmaschine oder einem Bearbeitungszentrum im Gegensatz zu Verfahren an Einzweckmaschinen mit Profilwälzfräsern oder Profilschleifscheiben ermöglicht werden kann. Fig. 4 zeigt eine photographische Darstellung eines Zahnrads mit Pfeilverzahnung gemäß einem ersten Versuch, ein eine Pfeilverzahnung aufweisendes Werkstück an einer Universalwerkzeugmaschine mittels eines Schaftfräsers gemäß eines Verfahrens entsprechend der neu entwickelten Methode herzustellen. Fig. 5 zeigt eine photographische Detaildarstellung des Zahnrads aus Fig. 4.

Das Zahnrad der Figs. 4 und 5 weist keine Mittelnut mehr auf sondern die Zähne der beiden Schrägverzahnungen der Pfeilverzahnung sind über die gesamte Zahnbreite der Pfeilverzahnung durchgängig ausgeformt und in der mittigen Spitze der Pfeilverzahnung über die gesamte Zahnhöhe miteinander verbunden, wodurch die Belastbarkeit der Pfeilverzahnung im Gegensatz zu einem Zahnrad mit Pfeilverzahnung und Mittelnut erheblich verbessert werden kann. Jedoch sind die Zahnflanken 12a und 13a bzw. 12b und 13b der Zahnzwischenräume 12 und 13 der beiden Schrägverzahnungen durch eine mittige ausgefräste Ausnehmung 11' voneinander getrennt, so dass in der mittigen Spitze der Pfeilverzahnung keine Abrollfläche mit einer Gegenflanke eines Gegenzahnrads zur Verfügung steht. Somit wird verhindert, dass die Zahnflanken mittig im spitzen Winkel zusammenlaufen bzw. ineinander übergehen, wodurch das Abrollverhalten beeinträchtigt werden könnte.

Das Herausarbeiten der Zahnflanken 12a, 12b, 13a und 13b erfolgte getrennt voneinander gemäß einem Verfahren, wie es aus dem Artikel "Auf einfachem Weg zu guten Zähnen - Zahnräder mit hoher Qualität auf Standardmaschinen fräsen" von Hans-Peter Schossig bekannt ist. Die Zahnflanken 12a, 12b, 13a bzw. 13b wurden somit getrennt voneinander durch sukzessives Abfahren von auf unterschiedlichen Profilhöhen in Flankenlinienrichtung verlaufenden Bearbeitungsbahnen mittels eines Schaftfräsers herausgearbeitet. Dementsprechend sind in Fig. 5 im Bereich des Zahngrunds zwischen den Zahnflanken 12a und 13a bzw. 12b und 13b Frässpuren in Flankenlinienrichtung erkennbar. Die mittige Ausnehmung 11' wurde anschließend mittels eines Schaftfräsers gefräst, indem der Schaftfräser entlang von in Profilrichtung verlaufenden Bearbeitungsbahnen gesteuert wurde, wie es anhand der Frässpuren im Bereich der Ausnehmung 11' in Fig. 5 erkennbar ist. Dieses Verfahren ist jedoch ebenfalls aufwendig und erfordert eine hohe Bearbeitungszeit, da die Zahnflanken getrennt voneinander herausgearbeitet werden und im Anschluss noch die Ausnehmung 11' mit einem Fräswerkzeug mit kleiner Werkzeuggröße und somit kleinem Zerspanvolumen herausgearbeitet werden muss, Zudem treten in den an die Ausnehmung 11' angrenzenden Randbereichen der Zahnflanken 12a, 12b, 13a und 13b weiterhin hohe Belastungen auf, da in der mittigen Spitze der Pfeilverzahnung keine Abrollfläche zur Verfügung steht.

EP 1 792 682 A1 beschreibt ein Verfahren zum Herstellen von Zahnradpumpen mit Pfeilverzahnungsabschnitten, Hierbei sind Wellen gezeigt, die in Zahnradpumpen zum Einsatz kommen und jeweils aus einem Werkstück hergestellt sind und, die aus zwei seitlich angeordneten Lagerzapfen und je einem Verzahnungsbereich bestehen, in dem je zwei Zahnradabschnitte vorgesehen sind, Die Zahnräder weisen über den Verzahnungsbereich eine Pfeilverzahnung auf. Zwischen den Zahnradabschnitten ist eine Ausnehmung in der Form eines Hinterstiches vorgesehen, der mindestens so tief ist wie der Zahnfußkreis

### Zusammenfassung der Erfindung

Im Hinblick auf die vorstehend beschriebenen aus dem Stand der Technik bekannten Verfahren zur Herstellung eines eine Pfeilverzahnung aufweisenden Zahnrads ist es eine Aufgabe der vorliegenden Erfindung, die Bearbeitung bzw. das Herstellen eines Pfeilverzahnung aufweisenden Zahnrads weiter zu vereinfachen und bei kürzeren Bearbeitungszeiten zu ermöglichen. Weiterhin ist es eine Aufgabe der vorliegenden Erfindung, die Bearbeitung bzw, das Herstellen eines Pfellverzahnung aufweisenden Zahnrads an einer numerisch gesteuerten Universalwerkzeugmaschine derart zu verbessern, dass ein Zahnrad mit Pfeilverzahnung mit höherer Festigkeit und verbessertem Laufverhalten hergestellt werden kann,

Zur Lösung der vorstehend beschriebenen Aufgaben der vorliegenden Erfindung werden ein Verfahren zum Herstellen eines eine Pfeilverzahnung aufweisenden Zahnrads gemäß Anspruch 1, ein Verfahren zum Erzeugen von Steuerdaten zur Ausbildung einer Pfeilverzahnung auf einem Werkstück gemäß Anspruch 17, eine Vorrichtung zum Erzeugen von Steuerdaten zur Ausbildung einer Pfeilverzahnung auf einem Werkstück gemäß Anspruch 18, eine numerisch gesteuerte, zumindest 4 Achsen umfassende Werkzeugmaschine gemäß Anspruch 19 und ein Computerprogrammprodukt gemäß Anspruch 20 vorgeschlagen. Merkmale bevorzugter Ausführungsformen der vorliegenden Erfindung werden in den abhängigen Ansprüchen beschrieben.

Gemäß der vorliegenden Erfindung wird ein Verfahren zum Herstellen eines eine Pfellverzahnung aufweisenden Zahnrads mittels fräsender Bearbeitung eines Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum,durch sukzessives Abfahren von Bearbeitungsbahnen relativ zu dem Werkstück mit einem Fräswerkzeug, insbesondere einem Schaftfräser, der Werkzeugmaschine auf Grundlage von Steuerdaten vorgeschlagen. Das Herstellungsverfahren umfasst Erzeugen der Steuerdaten zum Steuern des Fräswerkzeugs relativ zu dem Werkstück und fräsendes Bearbeiten des Werkstücks an der Werkzeugmaschine mit dem Fräswerkzeug auf Grundlage der erzeugten Steuerdaten.

Der Schritt Erzeugen der Steuerdaten umfasst Festlegen einer ersten Zahnflankengeometrie, insbesondere auf Grundlage von vorgegebenen Verzahnungsinformationen, wobei die erste Zahnflankengeometrie einer Geometrie einer ersten Zahnflanke einer ersten Teilverzahnung der Pfeilverzahnung entspricht, Festlegen einer zweiten Zahnflankengeometrie, insbesondere auf Grundlage von vorgegebenen Verzahnungsinformationen, wobei die zweite Zahnflankengeometrie einer Geometrie einer zweiten Zahnflanke einer zweiten Teilverzahnung der Pfeilverzahnung entspricht, Festlegen einer Übergangsabschnittsgeometrie, die einer Geometrie eines Übergangsabschnitts zwischen der ersten Zahnflanke und der zweiten Zahnflanke entspricht, Bestimmen einer Gesamtzahnflankengeometrie, die die erste Zahnflankengeometrie, die Übergangsabschnittsgeometrie und die zweite Zahnflankengeometrie umfasst, und Erzeugen der Steuerdaten auf Grundlage der Gesamtzahnflankengeometrie, wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie, der Übergangsabschnittsgeometrie und der zweiten Zahnflankengeometrie verlaufen.

Auf Grundlage der erzeugten Steuerdaten wird die fräsende Bearbeitung durchgeführt, wobei das Fräswerkzeug sukzessive entlang der von den Bahndaten angegebenen Bearbeitungsbahnen gesteuert wird.

Das erfindungsgemäße Verfahren bietet somit den Vorteil, dass eine erste Zahnflanke der einen Teilverzahnung einer Pfeilverzahnung, insbesondere der einen Schrägverzahnung der Pfeilverzahnung, eine zweite Zahnflanke der anderen Teilverzahnung einer Pfeilverzahnung, insbesondere der anderen Schrägverzahnung der Pfeilverzahnung, und ein Übergangsbereich zwischen der ersten Zahnflanke und der zweiten Zahnflanke in einem Bearbeitungsschritt erfolgen kann, da das Fräswerkzeug jeweils entlang von Bearbeitungsbahnen geführt werden kann, bei denen die Bearbeitungsbahnen jeweils ohne Unterbrechung entlang der ersten Zahnflankengeometrie der ersten Zahnflanke, der Übergangsabschnittsgeometrie des Übergangsabschnitts und der zweiten Zahnflankengeometrie der zweiten Zahnflanke verlaufen. Somit kann die Bearbeitung effizienter und bei kürzerer Bearbeitungszeit erfolgen.

Weiterhin ergeben sich durch die Bearbeitungsbahnen, die jeweils ohne Unterbrechung entlang der ersten Zahnflankengeometrie der ersten Zahnflanke, der Übergangsabschnittsgeometrie des Übergangsabschnitts und der zweiten Zahnflankengeometrie der zweiten Zahnflanke verlaufen, glatte und harmonische Übergänge im Übergangsbereich zwischen dem mittigen Übergangsabschnitt und den Randbereichen der Zahnflanken, wodurch die Belastungen beim Abrollen unter Last im Randbereich der Zahnflanken verringert werden können und sich somit eine noch höhere Festigkeit der Verzahnung ergibt. Zudem ermöglichen die direkte Führung der Bearbeitungsbahnen ohne Unterbrechung entlang der ersten Zahnflankengeometrie, der Übergangsabschnittsgeometrie und der zweiten Zahnflankengeometrie eine Bearbeitung aufgrund einer kontinuierlichen Bewegung der Achsen der Werkzeugmachine eine höhere Bearbeitungsgenauigkeit und bessere Oberflächengüte.

Zudem kann der Zwischenbereich zwischen den Zahnzwischenräumen der Teilverzahnungen der Pfeilverzahnung mit größeren Werkzeugen und somit größerem Zerspanvolumen herausgearbeitet werden, wodurch die Bearbeitungszeit weiter verringert werden kann. Insgesamt kann die Fräsbearbeitung für die Zahnradfertigung sehr effizient mit großen Werkzeugen mit großem Zerspanvolumen durchgeführt werden.

Da die Zähne der einen Teilverzahnung der Pfeilverzahnung aufgrund des Übergangsabschnitts mit den Zähnen der anderen Teilverzahnung der Pfeilverzahnung verbunden sind und nicht durch eine Nut getrennt werden, kann die Belastbarkeit und Festigkeit der Verzahnung gegenüber einem Zahnrad mit Pfeilverzahnung mit Mittelnut erheblich erhöht werden.

Vorzugsweise wird die Übergangsabschnittsgeometrie derart erzeugt, dass die erste Zahnflankengeometrie an einer Mehrzahl von Randpunkten der ersten Zahnflankengeometrie tangential in die Übergangsabschnittsgeometrie übergeht und die Übergangsabschnittsgeometrie an einer Mehrzahl von Randpunkten der zweiten Zahnflankengeometrie tangential in die zweite Zahnflankengeometrie übergeht. Somit ergeben sich vorteilhaft tangentiale Übergänge zwischen dem mittigen Übergangsbereich und den Zahnflanken, wodurch der Verlauf der Bearbeitungsbahnen noch kontinuierlicher und effizienter festgelegt werden kann und die Belastungen beim Abrollen unter Last im Randbereich der Zahnflanken noch weiter verringert werden können und sich somit eine noch höhere Festigkeit der Verzahnung ergibt. Weiterhin wird durch die tangentialen Übergänge zum Übergangsabschnitt vorteilhaft ermöglicht, dass die Rundachsen der Werkzeugmaschine bei dem Verfahren des Fräswerkzeugs entlang der Bearbeitungsbahnen eine harmonische, kontinuierliche Bewegung ausführen, wodurch eine höhere Bearbeitungsgenauigkeit und höhere Oberflächengüte erreicht werden kann. Zudem können Spannungsspitzen im Material bei hoher Belastung der Verzahnung aufgrund der tangentialen Übergänge zum Übergangsabschnitt stark reduziert werden.

Vorzugsweise werden die Randpunkte der ersten Zahnflankengeometrie auf einer ersten Schnittlinie zwischen der ersten Zahnflankengeometrie und einer senkrecht zur Achse des Zahnrads stehenden ersten Schnittfläche festgelegt und vorzugsweise werden die Randpunkte der zweiten Zahnflankengeometrie auf einer zweiten Schnittlinie zwischen der zweiten Zahnflankengeometrie und einer senkrecht zur Achse des Zahnrades stehenden zweiten Schnittfläche festgelegt. Dies ermöglicht ein einfaches Festlegen des Randbereichs der Zahnflanken im Übergang zu dem mittigen Übergangsabschnitt.

Vorzugsweise umfasst der Schritt Erzeugen der Steuerdaten weiterhin Festlegen einer senkrecht zur Achse des Zahnrads stehenden Mittelfläche der Pfeilverzahnung, wobei die erste Schnittfläche und die zweite Schnittfläche von der Mittelfläche der Pfeilverzahnung vorzugsweise einen gleichen Abstand aufweisen und die Mittelfläche vorzugsweise zwischen der ersten und der zweiten Schnittfläche liegt. Dies ermöglicht ein weiter vereinfachtes, in Bezug auf die Symmetrie der Pfeilverzahnung symmetrisches Festlegen des Randbereichs der Zahnflanken im Übergang zu dem mittigen Übergangsabschnitt.

Vorzugsweise ist die Übergangsabschnittsgeometrie in Zahnflankenlinienrichtung konkav geformt ist oder konvex geformt. Somit kann vorteilhaft sowohl die konvexe Flankenseite der Zähne der Pfeilverzahnung als auch die der konvexen Flankenseite gegenüberliegende konkave Flankenseite der Zähne der Pfeilverzahnung mittels des erfindungsgemäßen Verfahrens herausgearbeitet werden.

Vorzugsweise entspricht die Übergangsabschnittsgeometrie einer abgerundeten Fläche, insbesondere einer Filletfläche, zwischen der ersten Zahnflankengeometrie und der zweiten Zahnflankengeometrie. Somit ergibt sich eine vorteilhaft kontinuierliche Geometrie für den Übergangsabschnitt zwischen den Zahnflanken der Teilverzahnungen der Pfeilverzahnung, wobei die Übergangsabschnittsgeometrie auf einfache Weise durch Kreisbogensegmente modelliert bzw. definiert werden kann.

Vorzugsweise wird die Übergangsabschnittsgeometrie durch eine Mehrzahl von die erste Zahnflankengeometrie und die zweite Zahnflankengeometrie verbindenden Kreisbogensegmenten festgelegt. Somit ergibt sich eine vorteilhaft einfach modellierbare (z.B. mittels eines CAD-Systems), abgerundete Übergangsfläche im Übergangsabschnitt zwischen den Zahnflanken der Teilverzahnungen der Pfeilverzahnung. Weiterhin wird durch die Kreisbogensegmentform des Übergangsabschnitts zwischen den Zahnflanken ermöglicht, dass die Rundachsen der Werkzeugmaschine bei dem Verfahren des Fräswerkzeugs entlang der Bearbeitungsbahnen eine harmonische, kontinuierliche Bewegung ausführen, wodurch eine höhere Bearbeitungsgenauigkeit und höhere Oberflächengüte erreicht werden kann.

Vorzugsweise verlaufen die Kreisbogensegmente der Übergangsabschnittsgeometrie auf unterschiedlichen Profilhöhen und vorzugsweise verbindet jedes Kreisbogensegment einen jeweiligen ersten Randpunkt der ersten Zahnflankengeometrie mit einem jeweiligen zweiten Randpunkt der zweiten Zahnflankengeometrie, wobei der jeweilige erste Randpunkt und der jeweilige zweite Randpunkt vorzugsweise auf gleicher Profilhöhe festgelegt sind. Gleiche Profilhöhe meint hierbei insbesondere mit gleichem Abstand zum Zahngrund bei symmetrischen Zahnflanken, wobei die Randpunkte insbesondere den gleichen Abstand zur Achse des Werkstücks bzw. Zahnrads aufweisen.

Vorzugsweise gehen die Kreisbogensegmente an den jeweiligen Randpunkten der jeweiligen Zahnflankengeometrie tangential in die jeweilige Zahnflankengeometrie über. Somit ergeben sich vorteilhaft tangentiale Übergänge zwischen dem mittigen Übergangsbereich und den Zahnflanken, wodurch der Verlauf der Bearbeitungsbahnen noch kontinuierlicher und effizienter festgelegt werden kann und die Belastungen beim Abrollen unter Last im Randbereich der Zahnflanken noch weiter verringert werden können und sich somit eine noch höhere Festigkeit der Verzahnung ergibt. Weiterhin wird durch die tangentialen Übergänge zum Übergangsabschnitt und die Kreisbogensegmentform ermöglicht, dass die Rundachsen der Werkzeugmaschine bei dem Verfahren des Fräswerkzeugs entlang der Bearbeitungsbahnen eine optimale harmonische, kontinuierliche Bewegung ausführen, wodurch eine optimale Bearbeitungsgenauigkeit und optimale Oberflächengüte erreicht werden kann. Zudem können Spannungsspitzen im Material bei hoher Belastung der Verzahnung aufgrund der tangentialen Übergänge zum Übergangsabschnitt und der kontinuierlichen Kreisbogensegmentform erheblich reduziert werden.

Vorzugsweise umfasst der Schritt Erzeugen einer Übergangsabschnittsgeometrie die Schritte Festlegen zumindest eines ersten Randpunktes der ersten Zahnflankengeometrie, Festlegen zumindest eines zweiten Randpunktes der zweiten Zahnflankengeometrie, wobei der erste Randpunkt und der zweite Randpunkt auf gleicher Profilhöhe der Zahnflanken festgelegt werden, Festlegen eines ersten Normalenvektors auf der ersten Zahnflankengeometrie in dem ersten Randpunkt, Festlegen eines zweiten Normalenvektors auf der zweiten Zahnflankengeometrie in dem zweiten Randpunkt, Festlegen eines Schnittpunkts zwischen einer ersten Geraden und einer zweiten Geraden, wobei die erste Gerade durch die Richtung des ersten Normalenvektors vorgegeben ist und die zweite Gerade durch die Richtung des zweiten Normalenvektors vorgegeben ist, und Festlegen eines Kreisbogensegments von dem ersten Randpunkt zu dem zweiten Randpunkt, wobei der Schnittpunkt zwischen der ersten Geraden und der zweiten Geraden Mittelpunkt des Kreisbogensegments ist, wobei die Übergangsabschnittsgeometrie derart erzeugt wird, dass sie das Kreisbogensegment umfasst. Insbesondere umfasst der Schritt Erzeugen einer Übergangsabschnittsgeometrie die Schritte Festlegen einer ersten Gruppe von Randpunkten der ersten Zahnflankengeometrie, wobei die Randpunkte der ersten Gruppe jeweils auf verschiedenen Profilhöhen der ersten Zahnflankengeometrie festgelegt werden, Festlegen einer zweiten Gruppe von Randpunkten der zweiten Zahnflankengeometrie, wobei jeder Randpunkt der zweiten Gruppe auf gleicher Profilhöhe mit einem jeweiligen Randpunkt der ersten Gruppe festgelegt wird, Festlegen einer ersten Gruppe von Normalenvektoren auf der ersten Zahnflankengeometrie, wobei jeweils ein Normalenvektor der ersten Gruppe von Normalenvektoren in einem Randpunkt der ersten Gruppe von Randpunkten festgelegt wird, Festlegen einer zweiten Gruppe von Normalenvektoren auf der zweiten Zahnflankengeometrie, wobei jeweils ein Normalenvektor der zweiten Gruppe von Normalenvektoren in einem Randpunkt der zweiten Gruppe von Randpunkten festgelegt wird, Festlegen einer Gruppe von Schnittpunkten, wobei jeder Schnittpunkt ein Schnittpunkt zwischen einer Geraden einer ersten Gruppe von Geraden und einer Geraden einer zweiten Gruppe von Geraden ist, wobei jede Gerade der ersten Gruppe von Geraden durch die Richtung eines Normalenvektors der ersten Gruppe von Normalenvektoren vorgegeben ist und jede Gerade der zweiten Gruppe von Geraden durch die Richtung eines Normalenvektors der zweiten Gruppe von Normalenvektoren vorgegeben ist, und Festlegen einer Gruppe von Kreisbogensegmenten, wobei jedes Kreisbogensegment einen Randpunkt der ersten Gruppe von Randpunkten mit einem auf gleicher Profilhöhe liegenden Randpunkt der zweiten Gruppe von Randpunkten verbindet, wobei ein Schnittpunkt der ersten Geraden und der ersten Geraden Mittelpunkt des Kreisbogensegments ist, und wobei die Übergangsabschnittsgeometrie derart erzeugt wird, dass sie die Gruppe von Kreisbogensegmenten umfasst.

Durch dieses bevorzugte Verfahren können auf besonders einfache Weise ein oder mehrere Kreisbogensegmente zur Modellierung der Übergangsabschnittsgeometrie zwischen den Zahnflanken der Teilverzahnungen der Pfeilverzahnung definiert werden, die an den jeweiligen Randpunkten der Zahnflanken tangential in die Flächen der Zahnflanken übergehen, da die Konstruktion der Kreisbogensegmente auf Grundlage der Schnittpunkte der Flächennormalen in den auf gleicher Profilhöhe liegenden Randpunkten der Zahnflankengeometrien erfolgt. Es ergeben sich aufgrund der Profilform, z.B. einer Evolvente, der Zahnflanken ggf. auf unterschiedlichen Profilhöhen Kreisbogensegmente mit jeweils verschiedenen Kreisbogenradien (Filletradien).

Bei gleicher Profilform und gleichem Schrägungswinkel der ersten Zahnflanke und der zweiten Zahnflanke wird es durch die gleiche Profilhöhe von paarweisen Randpunkten der ersten und zweiten Zahnflankengeometrien gewährleistet, dass sich die Flächennormalen durch die Randpunkte jeweils paarweise in einem gemeinsamen Schnittpunkt schneiden. Weichen die Profilformen der ersten und zweiten Zahnflanken jedoch ab und/oder weicht der Schrägungswinkel der ersten Zahnflanke von dem Schrägungswinkel der zweiten Zahnflanke ab, können die paarweisen Randpunkte der ersten und zweiten Zahnflanken jeweils in unterschiedlicher Profilhöhe derart festgelegt werden, dass sich wiederrum ein Schnittpunkt zwischen den paarweisen Flächennormalen durch die paarweisen Randpunkte der ersten und zweiten Zahnflanke ergibt. Unabhängig von der genauen Profilform der Zahnflanken und genauen Position der Randpunkte relativ zur Spitze der Pfeilverzahnung definiert jedes Kreisbogensegment, dessen Mittelpunkt als ein Schnittpunkt zwischen zwei Flächennormalen durch paarweise Randpunkte der ersten und zweiten Zahnflanke festgelegt wird, ein Kreisbogensegment mit jeweiligen tangentialen Übergängen in die erste und zweite Zahnflanke.

Vorzugsweise ist die erste Teilverzahnung eine erste Schrägverzahnung der Pfeilverzahnung und vorzugsweise ist die zweite Teilverzahnung eine zweite Schrägverzahnung der Pfeilverzahnung. Vorzugsweise ist die erste Schrägverzahnung linkssteigend oder rechtssteigend und vorzugsweise weist die zweite Schrägverzahnung eine der Steigung der ersten Schrägverzahnung entgegengesetzte Steigung auf, insbesondere vorzugsweise eine entgegengesetzte Steigung mit gleichem Schrägungswinkel. Jedoch ist die vorliegende Erfindung nicht auf Pfeilverzahnungen mit zwei Schrägverzahnungen beschränkt, die in Flankenlinienrichtung einen geraden Verlauf aufweisen, sondern vielmehr kann die vorliegende Erfindung auch bei Pfeilverzahnungen angewendet werden, deren Teilverzahnungen einen in Flankenlinienrichtung vom geraden Verlauf abweichenden Verlauf aufweisen und z.B. in Flankenlinienrichtung entlang eines Kreisbogens, einer Evolvente oder einer andersartigen gekrümmten Kurven verlaufen.

Vorzugsweise weisen die erste Zahnflankengeometrie und die zweite Zahnflankengeometrie die gleiche Zahnflankenprofilform auf, insbesondere vorzugsweise die gleiche Evolventenprofilform. Dies ermöglicht es, bei gleichem Abstand der Randpunkte der ersten Zahnflanke und der zweiten Zahnflanke zur Mittelfläche der Pfeilverzahnung, die senkrecht zu der Achse des die Pfeilverzahnung aufweisenden Zahnrads steht, und bei gleicher Profilhöhe paarweiser Randpunkte der ersten und zweiten Zahnflanken zu gewährleisten, dass sich die paarweisen Flächennormalen durch die paarweisen Randpunkte einen gemeinsamen Schnittpunkt haben.

Vorzugsweise ist die Gesamtzahnflankengeometrie eine erste Gesamtzahnflankengeometrie, die in Zahnflankenlinienrichtung konkav geformt ist, und vorzugsweise umfasst der Schritt Erzeugen der Steuerdaten Festlegen einer dritten Zahnflankengeometrie, die einer Geometrie einer dritten, der ersten Zahnflankengeometrie gegenüberliegenden Zahnflanke der ersten Teilverzahnung der Pfeilverzahnung entspricht, Festlegen einer vierten Zahnflankengeometrie, die einer Geometrie einer vierten, der zweiten Zahnflankengeometrie gegenüberliegenden Zahnflanke der zweiten Teilverzahnung der Pfeilverzahnung entspricht, Festlegen einer zweiten Übergangsabschnittsgeometrie, die einer Geometrie eines Übergangsabschnitts zwischen der dritten Zahnflanke und der vierten Zahnflanke entspricht und in Zahnflankenlinienrichtung konvex geformt ist, und Bestimmen zumindest einer zweiten Gesamtzahnflankengeometrie, die die dritte Zahnflankengeometrie, die zweite Übergangsabschnittsgeometrie und die vierte Zahnflankengeometrie umfasst, wobei die Steuerdaten weiterhin auf Grundlage der zweiten Gesamtzahnflankengeometrie erzeugt werden und weitere Bahndaten zum Steuern des Fräswerkzeugs der Werkzeugmaschine angeben, wobei die weiteren Bearbeitungsbahnen jeweils quer zur Profilrichtung der dritten und vierten Zahnflanke und entlang der dritten Zahnflankengeometrie, der zweiten Übergangsabschnittsgeometrie und der vierten Zahnflankengeometrie verlaufen. Somit kann vorteilhaft sowohl die konvexe Flankenseite der Zähne der Pfeilverzahnung als auch die der konvexen Flankenseite gegenüberliegende konkave Flankenseite der Zähne der Pfeilverzahnung mittels des erfindungsgemäßen Verfahrens herausgearbeitet werden.

Vorzugsweise wird die erste Übergangsabschnittsgeometrie derart erzeugt, dass die erste Zahnflankengeometrie an einer Mehrzahl von Randpunkten der ersten Zahnflankengeometrie im Wesentlichen tangential in die erste Übergangsabschnittsgeometrie übergeht und die erste Übergangsabschnittsgeometrie an einer Mehrzahl von Randpunkten der zweiten Zahnflankengeometrie im Wesentlichen tangential in die zweite Zahnflankengeometrie übergeht und vorzugsweise wird die zweite Übergangsabschnittsgeometrie derart erzeugt, dass die dritte Zahnflankengeometrie an einer Mehrzahl von Randpunkten der dritten Zahnflankengeometrie im Wesentlichen tangential in die zweite Übergangsabschnittsgeometrie übergeht und die zweite Übergangsabschnittsgeometrie an einer Mehrzahl von Randpunkten der vierten Zahnflankengeometrie im Wesentlichen tangential in die vierte Zahnflankengeometrie übergeht. Vorzugsweise werden die Randpunkte der ersten Zahnflankengeometrie auf einer ersten Schnittlinie zwischen der ersten Zahnflankengeometrie und einer senkrecht zur Achse des Zahnrads stehenden ersten Schnittfläche festgelegt und vorzugsweise werden die Randpunkte der zweiten Zahnflankengeometrie auf einer zweiten Schnittlinie zwischen der zweiten Zahnflankengeometrie und einer senkrecht zur Achse des Zahnrades stehenden zweiten Schnittfläche festgelegt. Weiterhin werden vorzugsweise die Randpunkte der dritten Zahnflankengeometrie auf einer dritten Schnittlinie zwischen der dritten Zahnflankengeometrie und einer senkrecht zur Achse des Zahnrads stehenden dritten Schnittfläche festgelegt und vorzugsweise werden die Randpunkte der vierten Zahnflankengeometrie auf einer vierten Schnittlinie zwischen der vierten Zahnflankengeometrie und einer senkrecht zur Achse des Zahnrades stehenden vierten Schnittfläche festgelegt.

Vorzugsweise weisen die erste Schnittfläche und die zweite Schnittfläche einen kleineren Abstand zueinander auf als die dritte Schnittfläche und die vierte Schnittfläche. Dies ermöglicht es vorteilhaft, dass die konkave Übergangsabschnittsgeometrie der Pfeilverzahnung aus Kreisbogensegmenten mit kleinerem Radius gebildet wird als die konvexe Übergangsabschnittsgeometrie der Pfeilverzahnung. Somit ergibt sich eine Gesamtgeometrie der Verzahnung bei der das Flankenspiel vom Randbereich der Zahnflanken in einem harmonischen, tangentialen Übergang hin zu der Mitte bzw. Spitze der Pfeilverzahnung vergrößert wird. Somit kann durch die geeignete Wahl der Abstände zwischen der ersten Schnittfläche und der zweiten Schnittfläche und zwischen der dritten Schnittfläche und der vierten Schnittfläche die Größe des mittigen Bereichs der Zähne der Pfeilverzahnung eingestellt werden, in dem kein Abrollen der konvexen Zahnflankenseite mit der konkaven Zahnflankenseite erfolgt. Durch geeignetes Anpassen der Abstände zwischen der ersten Schnittfläche und der zweiten Schnittfläche und zwischen der dritten Schnittfläche und der vierten Schnittfläche kann eine Abrollfläche der Zahnflanken auch derart optimiert werden, dass bis zur Mitte oder zumindest im Wesentlichen bis zur Mitte der Pfeilverzahnung eine tragende Abrollfläche geschaffen werden kann. Dies ermöglicht es, das Laufverhalten der Pfeilverzahnung weiter zu optimieren und auch die Belastbarkeit der Pfeilverzahnung zu erhöhen, da die Last beim Abrollen gleichmäßiger verteilt werden kann.

Vorzugsweise werden weiterhin die Randpunkte einer Zahnflanke im Übergangsbereich zu einer konkaven Übergangsabschnittsgeometrie und die Randpunkte einer gegenüberliegenden Zahnflanke im Übergangsbereich zu einer konvexen Übergangsabschnittsgeometrie derart gewählt, dass die Randpunkte der Zahnflanke im Übergangsbereich zu der konkaven Übergangsabschnittsgeometrie und die Randpunkte der gegenüberliegenden Zahnflanke im Übergangsbereich zu der konvexen Übergangsabschnittsgeometrie paarweise den gleichen Abstand zur Mittelachse des Werkstücks bzw. Zahnrads aufweisen, so dass die Randpunkte paarweise insbesondere auf einem Kreisbogen liegen, der in einer zur Mittelachse des Werkstücks bzw. Zahnrads senkrecht stehenden Ebene liegt und dessen Mittelpunkt auf der Mittelachse liegt.

Gemäß eines weiteren Aspekts der vorliegenden Erfindung wird ein Verfahren zum Erzeugen von Steuerdaten zur Ausbildung einer Pfeilverzahnung auf einem Werkstück gemäß eines vorstehend beschriebenen Herstellungsverfahrens, insbesondere vorzugsweise gemäß eines oder mehrerer der bevorzugten Ausführungsformen, durch fräsende Bearbeitung des Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, insbesondere einem Schaftfräser, der Werkzeugmaschine auf Grundlage der Steuerdaten vorgeschlagen. Erfindungsgemäß umfasst Erzeugen der Steuerdaten Festlegen einer ersten Zahnflankengeometrie, die einer Geometrie einer ersten Zahnflanke einer ersten Teilverzahnung der Pfeilverzahnung entspricht, Festlegen einer zweiten Zahnflankengeometrie, die einer Geometrie einer zweiten Zahnflanke einer zweiten Teilverzahnung der Pfeilverzahnung entspricht, Festlegen einer Übergangsabschnittsgeometrie, die einer Geometrie eines Übergangsabschnitts zwischen den ersten und zweiten Zahnflanken entspricht, Bestimmen einer Gesamtzahnflankengeometrie, die die erste Zahnflankengeometrie, die Übergangsabschnittsgeometrie und die zweite Zahnflankengeometrie umfasst, und Erzeugen von Steuerdaten auf Grundlage der Gesamtzahnflankengeometrie, wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie, der Übergangsabschnittsgeometrie und der zweiten Zahnflankengeometrie verlaufen.

Gemäß eines weiteren Aspekts der vorliegenden Erfindung wird eine Vorrichtung zum Erzeugen von Steuerdaten zur Ausbildung einer Pfeilverzahnung auf einem Werkstück gemäß eines vorstehend beschriebenen Herstellungsverfahrens, insbesondere vorzugsweise gemäß eines oder mehrerer der bevorzugten Ausführungsformen, durch fräsende Bearbeitung des Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, insbesondere einem Schaftfräser, der Werkzeugmaschine auf Grundlage der Steuerdaten vorgeschlagen. Die Vorrichtung umfasst erfindungsgemäß ein Geometriemodellierungsmittel zum Festlegen einer ersten Zahnflankengeometrie, die einer Geometrie einer ersten Zahnflanke einer ersten Teilverzahnung der Pfeilverzahnung entspricht, zum Festlegen einer zweiten Zahnflankengeometrie, die einer Geometrie einer zweiten Zahnflanke einer zweiten Teilverzahnung der Pfeilverzahnung entspricht, zum Festlegen einer Übergangsabschnittsgeometrie, die einer Geometrie eines Übergangsabschnitts zwischen den ersten und zweiten Zahnflanken entspricht, und zum Bestimmen einer Gesamtzahnflankengeometrie, die die erste Zahnflankengeometrie, die Übergangsabschnittsgeometrie und die zweite Zahnflankengeometrie umfasst, und ein Steuerdatenerzeugungsmittel zum Erzeugen von Steuerdaten auf Grundlage der Gesamtzahnflankengeometrie, wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie, der Übergangsabschnittsgeometrie und der zweiten Zahnflankengeometrie verlaufen.

Das Erzeugen der Steuerdaten erfolgt somit bei dem vorstehend beschriebenen Verfahren zum Erzeugen von Steuerdaten und bei der vorstehend beschriebenen Vorrichtung zum Erzeugen von Steuerdaten in gleicher Weise, wie bei dem vorstehend beschriebenen Herstellungsverfahren und bringt insbesondere die vorstehend beschriebenen Vorteile mit sich. Vorzugsweise werden die Steuerdaten insbesondere gemäß eines oder mehrerer der vorstehend unter Bezugnahme auf das Herstellungsverfahrens beschriebenen bevorzugten Aspekte erzeugt.

Gemäß eines weiteren Aspekts der vorliegenden Erfindung wird eine numerisch gesteuerte, zumindest 4 Achsen umfassende Werkzeugmaschine, insbesondere Fräsmaschine, Universal-Werkzeugmaschine oder Bearbeitungszentrum, zum fräsenden Bearbeiten eines Werkstücks durch sukzessives Abfahren von Bearbeitungsbahnen mit einem Fräswerkzeug, insbesondere Schaftfräser, der Werkzeugmaschine auf Grundlage von erzeugten Steuerdaten, vorgeschlagen, die eine Vorrichtung zum Erzeugen von Steuerdaten gemäß des vorstehend beschriebenen Aspekts der vorliegenden Erfindung umfasst.

Gemäß eines weiteren Aspekts der vorliegenden Erfindung wird ein Computerprogrammprodukt vorgeschlagen, das ein computerlesbares Medium und ein darin gespeichertes Computerprogramm umfasst, wobei das Computerprogramm in der Form einer Abfolge von Zuständen gespeichert ist, die Befehlen entspricht, die eingerichtet sind von einem Datenverarbeitungsmittel einer Datenverarbeitungseinrichtung verarbeitet zu werden, so dass eine Vorrichtung zum Erzeugen von Steuerdaten gemäß des vorstehend beschriebenen Aspekts der vorliegenden Erfindung gebildet wird.

### Kurzbeschreibung der Figuren

Fig. 1 zeigt eine beispielhafte Perspektivansicht eines Werkstücks mit Mittelnut und zwei Zahnzwischenräumen einer Pfeilverzahnung.
Fig. 2 zeigt eine Detailansicht des Werkstücks aus Fig. 1.
Fig. 3 zeigt eine Draufsicht auf die Zahnzwischenräume der Pfeilverzahnung aus Fig. 1.
Fig. 4 zeigt eine beispielhafte, photographische Darstellung eines Zahnrads mit Pfeilverzahnung ohne Mittelnut.
Fig. 5 zeigt eine photographische Detaildarstellung des Zahnrads mit Pfeilverzahnung ohne Mittelnut aus Fig. 4.
Fig. 6 zeigt eine Draufsicht auf ein geometrisches Modell eines Zahnzwischenraums eines Zahnradmodells mit einer ersten und einer zweiten Zahnflankengesamtgeometrie gemäß einem Ausführungsbeispiel der vorliegenden Erfindung.
Fig. 7 zeigt eine Detailperspektivansicht auf das geometrische Modell des Zahnzwischenraums aus Fig. 6.
Fig. 8 zeigt eine Perspektivansicht auf das geometrische Modell des Zahnzwischenraums aus Fig. 6 mit Hilfslinien.
Fig. 9 zeigt eine Detailperspektivansicht auf das geometrische Modell des Zahnzwischenraums aus Fig. 6 mit Hilfslinien.
Fig. 10 zeigt eine Perspektivansicht auf das geometrische Modell des Zahnzwischenraums aus Fig. 6 mit Hilfslinien.
Fig. 11 zeigt eine Detailperspektivansicht auf das geometrische Modell des Zahnzwischenraums aus Fig. 6 mit Hilfslinien.
Fig. 12 zeigt schematisch eine Vorrichtung zum Erzeugen von Steuerdaten nach einem Ausführungsbeispiel der vorliegenden Erfindung.

### Ausführliche Beschreibung bevorzugter Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

Es ist im Stand der Technik grundsätzlich bekannt, ein geometrisches Modell eines ein Verzahnung aufweisenden Werkstücks, einer Verzahnung bzw. einer Zahnflanke zu berechnen, z.B. mittels eines CAD-Systems, insofern benötigte Verzahnungsinformationsdaten vorgegeben bzw. festgelegt werden. Hierzu können insbesondere die folgenden Daten benötigt werden, um ein mathematisches bzw. numerisches Modell der Zahnflanke berechnen zu können:
- Daten, die eine Größe und Form des gesamten Werkstücks vor und/oder nach Bearbeitung (z.B. Daten zur Berechnung einer Rohteil- und/oder Fertigteilgeometrie bzw. eines Modells einer Rohteil- und/oder Fertigteilgeometrie) angeben,
- Daten, die eine Art der Bauform der Verzahnung angeben, also insbesondere z.B. eine Bauform aus den möglichen Bauformen z.B. bei Pfeilverzahnungen im Allgemeinen ein Stirnrad,
- Daten, die eine Verzahnungsart angeben, insbesondere z.B. eine Pfeilverzahnung einschließlich Eingriffswinkel und Schrägungswinkel,
- Daten, die eine Zahnflankenprofilform angeben, insbesondere z.B. eine Zahnflankenprofilform aus den Zahnflankenprofilformen Evolventenprofil, Zykloidprofil, und Kreisbogenprofil, oder andere,
- Daten, die eine Größe und/oder Form einer Zahngeometrie der Verzahnung angeben, insbesondere zum Beispiel Zahnhöhe, Zahndicke, Zahnbreite, oder ähnliche Parameter, und/oder
- Daten, die eine Zahl der Zähne und/oder ein Normalmodul der Verzahnung angeben.

Aufgrund der vorstehend genannten Daten ist es dann auf einfache Weise möglich, ein mathematisch exaktes Modell eines eine Verzahnung aufweisenden Werkstücks zu berechnen, mit Zahnflanken, die einer exakten mathematischen Zahnflankengeometrie entspricht, die insbesondere im Profil genau die vorgegebene Zahnflankenprofilform aufweist, zum Beispiel eine Evolventenprofilform.

Ausgehend von einem derartigen berechneten Modell, zum Beispiel ein mittels eines CAD-Systems berechneten Modell, ist es weiterhin möglich, auf Grundlage des Modells Bahndaten zu berechnen, zum Beispiel zur Erzeugung eines NC-Programms z.B. mittels eines CAM- oder CAD/CAM-Systems, die in Steuerdaten umfasst sind, anhand derer ein Werkzeug, wie zum Beispiel ein Schaftfräser oder andere, an einer zumindest 4 Achsen aufweisenden, numerisch gesteuerten Werkzeugmaschine, zum Beispiel einer Fräsmaschine, einer Universalfräsmaschine oder einem Universalbearbeitungszentrum, gesteuert werden kann, um durch sukzessives, abzeilendes Verfahren des Fräswerkzeugs entlang der Bearbeitungsbahnen sukzessive bzw. in Zeilen eine Zahnflanke auf dem Werkstück herauszuarbeiten. Hierbei sei insbesondere auf die Lehre der DE 10 2009 008 124 verwiesen, in der beschrieben ist, wie derartige Bearbeitungsbahnen auf Grundlage einer vorgegebenen Zahnflankengeometrie bevorzugt erzeugt werden können.

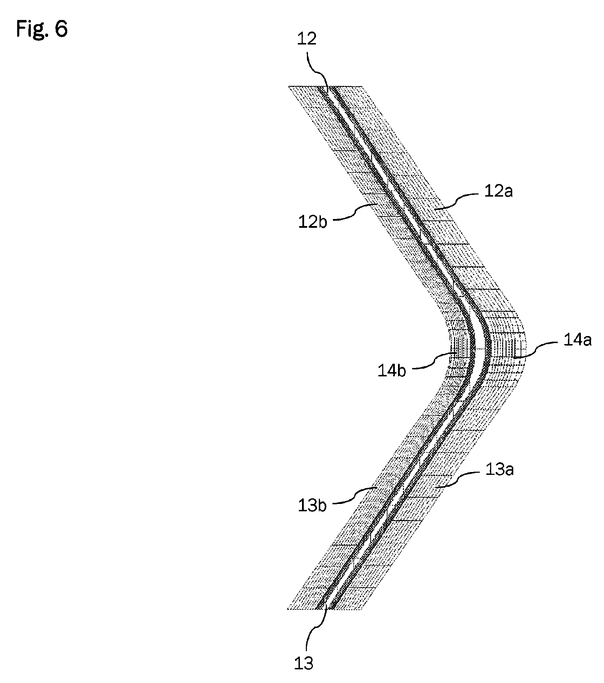

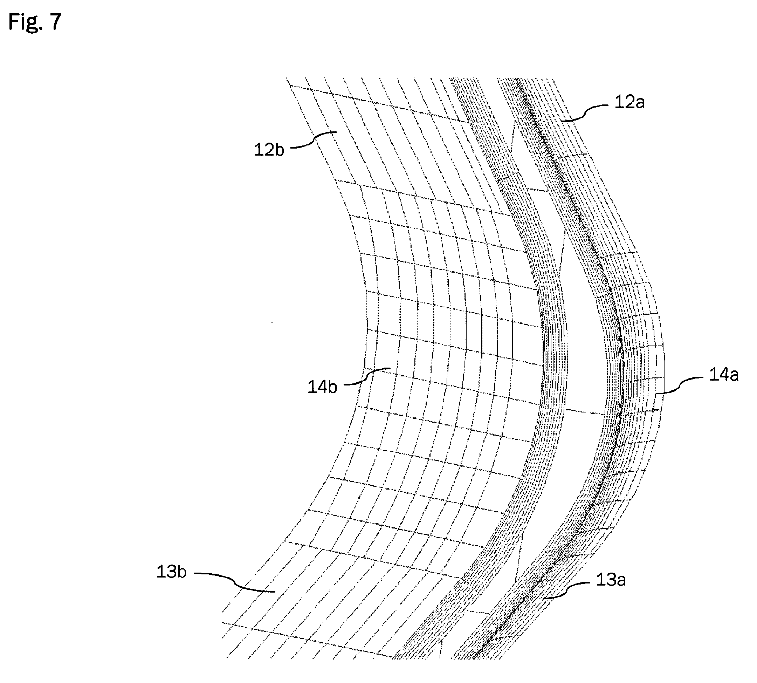

Fig. 6 zeigt eine Draufsicht auf ein geometrisches Modell eines Zahnzwischenraums eines Zahnradmodells mit einer ersten und einer zweiten Zahnflankengesamtgeometrie gemäß einem Ausführungsbeispiel der vorliegenden Erfindung. Fig. 7 zeigt eine Detailperspektivansicht auf das geometrische Modell des Zahnzwischenraums aus Fig. 6.

Das geometrische Modell eines Zahnzwischenraums aus Fig. 6 ist ein Modell eines Zahnzwischenraums einer Pfeilverzahnung mit einer linkssteigenden und einer rechtsteigenden Schrägverzahnung und umfasst eine erste Zahnflankengeometrie 12a, die einer Geometrie einer ersten Zahnflanke der ersten Schrägverzahnung entspricht, und eine zweite Zahnflankengeometrie 13a, die einer Geometrie einer zweiten Zahnflanke der zweiten Schrägverzahnung entspricht, wobei die erste Zahnflankengeometrie 12a und die zweite Zahnflankengeometrie 13a durch eine konkav geformte Übergangsgeometrie 14a verbunden sind. Die erste Zahnflankengeometrie 12a, die Übergangsabschnittsgeometrie 14a und die zweite Zahnflankengeometrie 13a bilden eine Gesamtzahnflankengeometrie auf deren Grundlage Steuerdaten erzeugt werden können, z.B. gemäß der Lehre der DE 10 2009 008 124, wobei die Steuerdaten Bahndaten angeben, die jeweils quer zur Profilrichtung der Zahnflankengeometrien 12a und 13a, insbesondere auf unterschiedlichen Profilhöhen, und entlang der ersten Zahnflankengeometrie 12a, der Übergangsabschnittsgeometrie 14a und der zweiten Zahnflankengeometrie 13a verlaufen. Die beiden Schrägverzahnungen der Pfeilverzahnung haben in diesem Ausführungsbeispiel den gleichen Schrägungswinkel.

Das geometrische Modell des Zahnzwischenraums umfasst eine dritte Zahnflankengeometrie 12b und eine vierte Zahnflankengeometrie 13b, die durch eine konvex geformte Übergangsgeometrie 14b verbunden sind. Die Zahnflankengeometrien 12a und 12b liegen sich gegenüber und die Zahnflankengeometrien 13a und 13b liegen sich gegenüber. Die dritte Zahnflankengeometrie 12b, die Übergangsabschnittsgeometrie 14b und die vierte Zahnflankengeometrie 13b bilden eine weitere Gesamtzahnflankengeometrie auf deren Grundlage ebenfalls Steuerdaten erzeugt werden können, z.B. gemäß der Lehre der DE 10 2009 008 124, wobei die Steuerdaten Bahndaten angeben, die jeweils quer zur Profilrichtung der Zahnflankengeometrien 12b und 13b, insbesondere auf unterschiedlichen Profilhöhen, und entlang der dritten Zahnflankengeometrie 12b, der Übergangsabschnittsgeometrie 14b und der vierten Zahnflankengeometrie 13b verlaufen. Somit kann insgesamt auf Grundlage der erzeugten Steuerdaten der Zahnzwischenraum fräsend aus einem Werkstück herausgearbeitet werden.

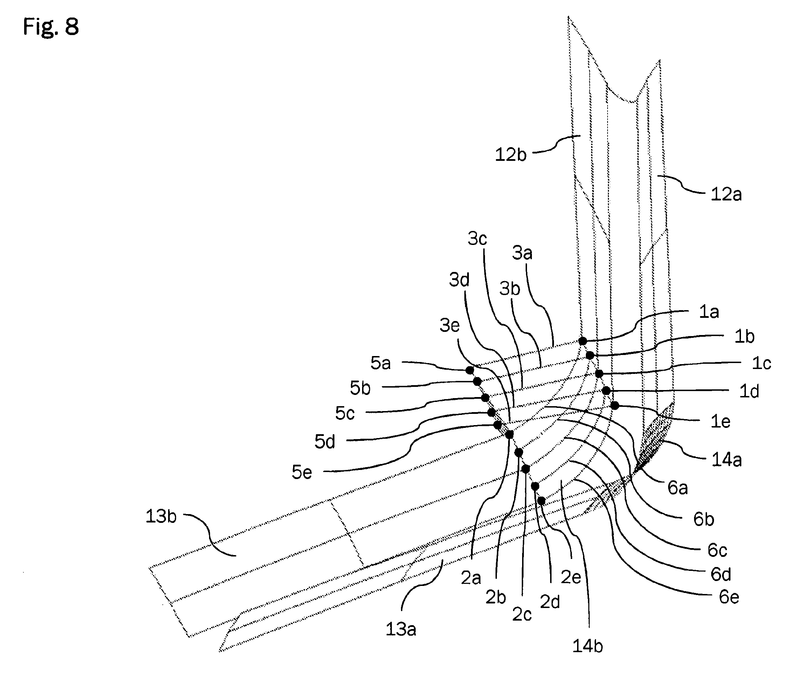

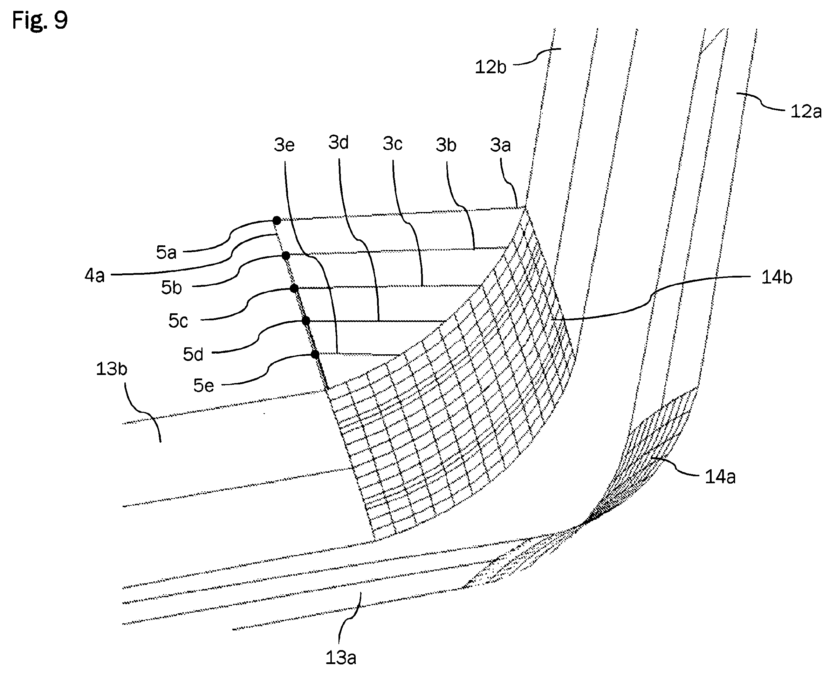

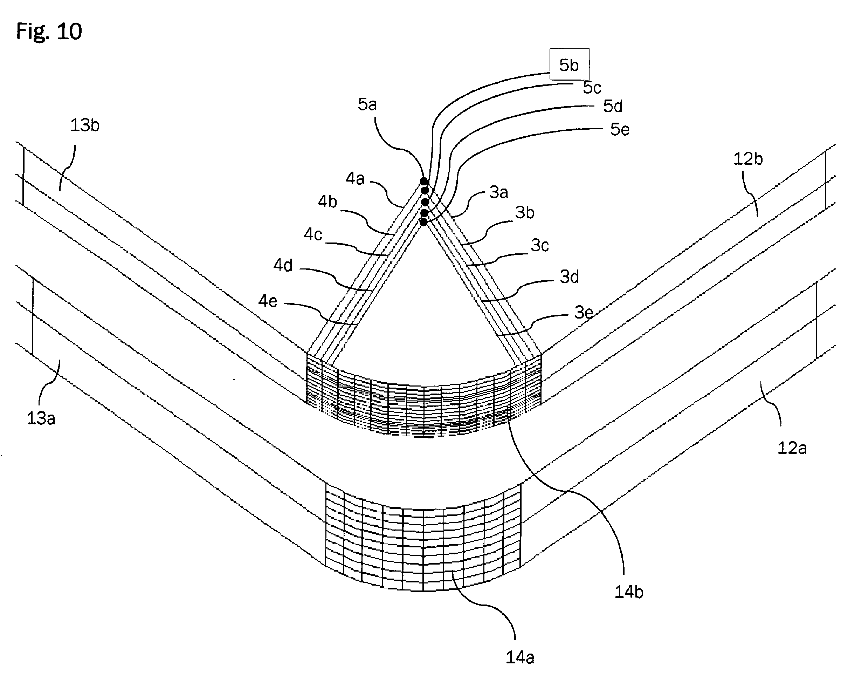

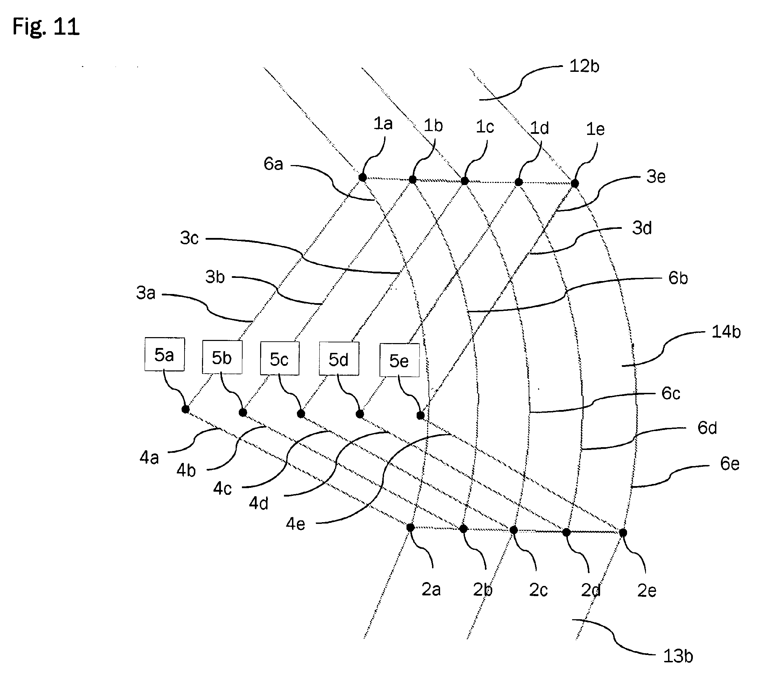

Gemäß dieses Ausführungsbeispiels bilden die Übergangsabschnittsgeometrien 14a und 14b jeweilige Filletflächen, die die jeweiligen Zahnflankengeometrien 12a und 13a bzw. 12b und 13b verbinden und jeweils aus einer Mehrzahl von Kreisbogensegmenten konstruiert sind, die an Randpunkten der Zahnflankengeometrien jeweils tangential in die Zahnflankengeometrien übergehen. Ein Ausführungsbeispiel einer Konstruktionsmethode für eine Übergangsabschnittsgeometrie definierende Kreisbogensegmente wird im Folgenden beispielhaft unter Bezugnahme auf die Figuren 8 bis 11 bezüglich der Übergangsabschnittsgeometrie 14b beschrieben. Fig. 8 zeigt eine Perspektivansicht auf das geometrische Modell des Zahnzwischenraums aus Fig. 6 mit Hilfslinien. Fig. 9 zeigt eine Detailperspektivansicht auf das geometrische Modell des Zahnzwischenraums aus Fig. 6 mit Hilfslinien. Fig. 10 zeigt eine Perspektivansicht auf das geometrische Modell des Zahnzwischenraums aus Fig. 6 mit Hilfslinien. Fig. 11 zeigt eine Detailperspektivansicht auf das geometrische Modell des Zahnzwischenraums aus Fig. 6 mit Hilfslinien.

Es werden an den Randbereichen der Zahnflankengeometrien 12b und 13b Randpunkte festgelegt. Hierbei werden am Rand der Zahnflankengeometrie 12b auf unterschiedlichen Profilhöhen liegende Randpunkte 1a, 1b, 1c, 1d und 1e festgelegt, die alle auf einer Schnittlinie der Zahnflankengeometrie 12b mit einer senkrecht zur Mittelachse des Zahnrads stehenden Schnittfläche liegen. Weiterhin werden am Rand der Zahnflankengeometrie 13b auf unterschiedlichen Profilhöhen liegende Randpunkte 2a, 2b, 2c, 2d und 2e festgelegt, die alle auf einer Schnittlinie der Zahnflankengeometrie 13b mit einer weiteren senkrecht zur Mittelachse des Zahnrads stehenden Schnittfläche liegen. Die beiden Schnittflächen haben hierbei einen gleichen Abstand zur Mitte der Pfeilverzahnung, die durch die Symmetrieachse der Pfeilverzahnung vorgegeben wird (siehe auch hierzu die Draufsicht aus Fig. 6). Hierbei ist in Fig. 6 auch erkennbar, dass die Randpunkte der konvexen Übergangsabschnittsgeometrie 14b bzw. der Zahnflankengeometrien 12b und 13b einen größeren Abstand zur Mitte der Pfeilverzahnung aufweisen als die Randpunkte der konkaven Übergangsabschnittsgeometrie 14a bzw. der Zahnflankengeometrien 12a und 13a aufweisen, wodurch sich gemäß dieses Ausführungsbeispiels für die konvexe Übergangsgeometrie 14b ein größere Rundungsradien ergeben als für die konkave Übergangsgeometrie 14a.

Die Randpunkte 1a bis 1e der Zahnflankengeometrie 12b liegen jeweils paarweise mit den Randpunkten 2a bis 2e der Zahnflankengeometrie 13b auf gleicher Profilhöhe der Zahnflankengeometrien 12b und 13b (d.h. Randpunkt 1a liegt auf gleicher Profilhöhe wie Randpunkt 2a, Randpunkt 1b liegt auf gleicher Profilhöhe wie Randpunkt 2b, usw.), wobei die Zahnflankengeometrien 12b und 13b weiterhin jeweils eine gleiche Profilform aufweisen.

In einem nächsten Schritt werden die Normalenvektoren auf die Zahnflankengeometrien 12b und 13b in den Randpunkten 1a bis 1e und 2a bis 2e bestimmt, wodurch die Flächennormalen (Geraden) 3a bis 3e und die Flächennormalen (Geraden) 4a bis 4e definiert werden können. Die Flächennormale 3a verläuft senkrecht zur Zahnflankengeometrie 12b durch den Randpunkt 1a, die Flächennormale 3b verläuft senkrecht zur Zahnflankengeometrie 12b durch den Randpunkt 1b, die Flächennormale 3c verläuft senkrecht zur Zahnflankengeometrie 12b durch den Randpunkt 1c, die Flächennormale 3d verläuft senkrecht zur Zahnflankengeometrie 12b durch den Randpunkt 1d und die Flächennormale 3e verläuft senkrecht zur Zahnflankengeometrie 12b durch den Randpunkt 1e. Analog verläuft die Flächennormale 4a senkrecht zur Zahnflankengeometrie 13b durch den Randpunkt 2a, die Flächennormale 4b verläuft senkrecht zur Zahnflankengeometrie 13b durch den Randpunkt 2b, die Flächennormale 4c verläuft senkrecht zur Zahnflankengeometrie 13b durch den Randpunkt 2c, die Flächennormale 4d verläuft senkrecht zur Zahnflankengeometrie 13b durch den Randpunkt 2d und die Flächennormale 4e verläuft senkrecht zur Zahnflankengeometrie 13b durch den Randpunkt 2e.

Da in diesem Ausführungsbeispiel die Profilform der Zahnflankengeometrien 12b und 13b gleich sind, die Randpunkte paarweise auf gleicher Profilhöhe angeordnet sind und die Schrägungswinkel der Zahnflankengeometrien 12b und 13b gleich sind, schneiden sich die Flächennormalen 3a bis 3e und 4a bis 4e jeweils paarweise in den Schnittpunkten 5a bis 5e (siehe insbesondere Fig. 11). Diese Schnittpunkte 5a bis 5e können als Mittelpunkte von Kreisbogensegmenten 6a bis 6e festgelegt werden, wobei das Kreisbogensegment 6a den Schnittpunkt 5a als Mittelpunkt hat und die Randpunkte 1a und 2a verbindet, das Kreisbogensegment 6b den Schnittpunkt 5b als Mittelpunkt hat und die Randpunkte 1b und 2b verbindet, das Kreisbogensegment 6c den Schnittpunkt 5c als Mittelpunkt hat und die Randpunkte 1c und 2c verbindet, das Kreisbogensegment 6d den Schnittpunkt 5d als Mittelpunkt hat und die Randpunkte 1d und 2d verbindet und das Kreisbogensegment 6e den Schnittpunkt 5e als Mittelpunkt hat und die Randpunkte 1e und 2e verbindet (siehe insbesondere Fig. 11). Durch die Konstruktion mittels der Flächennormalen 3a bis 3e und 4a bis 4e in den Randpunkten 1a bis 1e und 2a bis 2e gehen die Kreisbogensegmente 6a bis 6e in jeweils tangential in die Randpunkte 1a bis 1e der Zahnflankengeometrie 12b und in die Randpunkte 2a bis 2e der Zahnflankengeometrie 13b über.

Durch die Kreisbogensegmente 6a bis 63 kann nun die Übergangsabschnittsgeometrie 14b definiert werden, wobei die Übergangsgeometrie 14b die auf verschiedenen Profilhöhen verlaufenden Kreisbogensegmente 6a bis 6e umfasst.

Somit können Steuerdaten zum Steuern des Fräswerkzeugs relativ zu dem Werkstück erzeugt werden, indem die folgenden Schritte durchgeführt werden: Festlegen einer Zahnflankengeometrie 12b, die einer Geometrie einer Zahnflanke einer ersten Teilverzahnung der Pfeilverzahnung entspricht, Festlegen einer Zahnflankengeometrie 13b, die einer Geometrie einer Zahnflanke einer zweiten Teilverzahnung der Pfeilverzahnung entspricht, Festlegen einer Übergangsabschnittsgeometrie 14b, die einer Geometrie eines Übergangsabschnitts zwischen den Zahnflanken entspricht, Bestimmen einer Gesamtzahnflankengeometrie, die die Zahnflankengeometrie 12b, die Übergangsabschnittsgeometrie 14b und die Zahnflankengeometrie 13b umfasst. Im Anschluss können die Steuerdaten auf Grundlage der Gesamtzahnflankengeometrie erzeugt werden, wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der Zahnflankengeometrie 12b, der Übergangsabschnittsgeometrie 14b und der Zahnflankengeometrie 13b verlaufen.

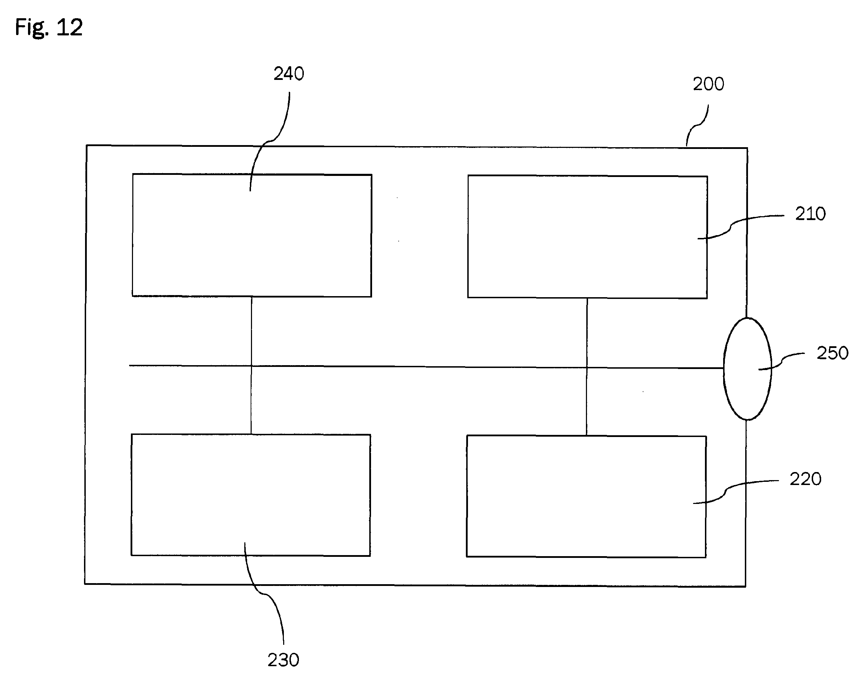

Fig. 12 zeigt schematisch eine Vorrichtung 200 zum Erzeugen von Steuerdaten nach einem Ausführungsbeispiel der vorliegenden Erfindung. Die Vorrichtung 200 ist geeignet zum Erzeugen von Steuerdaten zur Ausbildung einer Pfeilverzahnung auf einem Werkstück durch fräsende Bearbeitung des Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, insbesondere einem Schaftfräser, der Werkzeugmaschine auf Grundlage der Steuerdaten.

Die Vorrichtung 200 umfasst ein Verzahnungsinformationsdaten-Eingabemittel 210 zum Eingeben von Verzahnungsinformationsdaten z.B. mittels einer Tastatur und/oder einer Computer-Maus. Weiterhin umfasst die Vorrichtung ein Darstellungsmittel 220 zum Darstellen numerisch generierter Werkstückgeometrien, Verzahnungsgeometrien, einer oder mehrerer Zahnflankengeometrien, einer oder mehrerer Übergangsabschnittsgeometrien und einer oder mehrerer Gesamtzahnflankengeometrien.

Die Vorrichtung 200 umfasst weiterhin ein Geometriemodellierungsmittel 230 zum Festlegen einer ersten Zahnflankengeometrie (insbesondere auf Grundlage von eingegebenen Verzahnungsinformationsdaten), die einer Geometrie einer ersten Zahnflanke einer ersten Teilverzahnung der Pfeilverzahnung entspricht, zum Festlegen einer zweiten Zahnflankengeometrie (insbesondere auf Grundlage von eingegebenen Verzahnungsinformationsdaten), die einer Geometrie einer zweiten Zahnflanke einer zweiten Teilverzahnung der Pfeilverzahnung entspricht, zum Festlegen einer Übergangsabschnittsgeometrie, die einer Geometrie eines Übergangsabschnitts zwischen den ersten und zweiten Zahnflanken entspricht, und zum Bestimmen einer Gesamtzahnflankengeometrie, die die erste Zahnflankengeometrie, die Übergangsabschnittsgeometrie und die zweite Zahnflankengeometrie umfasst. Das Geometriemodellierungsmittel 230 ist insbesondere dazu geeignet, Randpunkte auf den Zahnflankengeometrien festzulegen, Normalenvektoren auf den Randpunkten bzw. Flächennormalen in den Randpunkten der Zahnflankengeometrien festzulegen, Schnittpunkte der Flächennormalen zu bestimmen und/oder Kreisbogensegmente festzulegen, die eine Übergangsabschnittsgeometrie festlegen bzw. definieren.

Die Vorrichtung 200 umfasst weiterhin ein Steuerdatenerzeugungsmittel 240 zum Erzeugen von Steuerdaten auf Grundlage der Gesamtzahnflankengeometrie, wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie, der Übergangsabschnittsgeometrie und der zweiten Zahnflankengeometrie verlaufen.

Weiterhin umfasst die Vorrichtung 200 eine Schnittstelle 250, mit der erzeugte Steuerdaten auf einen Datenträger gespeichert werden können, mit dem die Steuerdaten an eine Werkzeugmaschine weitergegeben werden können und/oder zum Verbinden mit einer Werkzeugmaschine (drahtlos oder per Kabelverbindung) zum Übertragen der Steuerdaten an die Werkzeugmaschine.

Zusammenfassend wird durch die vorliegende Erfindung die Bearbeitung bzw. das Herstellen eines Pfeilverzahnung aufweisenden Zahnrads weiter vereinfacht und bei kürzeren Bearbeitungszeiten ermöglicht. Weiterhin kann durch die vorliegenden Erfindung die Bearbeitung bzw. das Herstellen eines Pfeilverzahnung aufweisenden Zahnrads an einer numerisch gesteuerten Universalwerkzeugmaschine derart verbessert werden, dass ein Zahnrad mit Pfeilverzahnung mit höherer Festigkeit und verbessertem Laufverhalten hergestellt werden kann.

## Patentansprüche

1. Verfahren zum Herstellen eines eine Pfellverzahnung aufwelsenden Zahnrads (10) mittels fräsender Bearbeitung eines Werkstücks an einer zumindest 4 Achsen umfassenden, numerisch gesteuerten Werkzeugmaschine, Insbesondere an einer Fräsmaschine, einer Universal-Werkzeugmaschine oder einem Bearbeltungszentrum, durch sukzessives Abfahren von Bearbeitungsbahnen relativ zu dem Werkstück mit einem Fräswerkzeug, Insbesondere einem Schaftfräser, der Werkzeugmaschine auf Grundlage von Steuerdaten, umfassend;
- Erzeugen der Steuerdaten zum Steuern des Fräswerkzeugs relativ zu dem Werkstück, umfassend:
- Festlegen einer ersten Zahnflankengeometrie (12a; 12b), die einer Geometrie einer ersten Zahnflanke einer ersten Teilverzahnung der Pfellverzahnung entspricht,
- Festlegen einer zweiten Zahnflankengeometrie (13a: 13b), die einer Geometrie einer zweiten Zahnflanke einer zweiten Tellverzahnung der Pfellverzahnung entspricht,
- Festlegen einer Übergangsabschnittsgeometrie (14a; 14b), die einer Geometrie eines Übergangsabschnitts zwischen der ersten Zahnflanke und der zweiten Zahnflanke entspricht,
- Bestimmen einer Gesamtzahnflankengeometrie (12a, 13a, 14a; 12b, 13b, 14b), die die erste Zahnflankengeometrie (12a; 12b), die Übergangsabschnittsgeometrie (14a; 14b) und die zweite Zahnflankengeometrie (13a; 13b) umfasst, und
- Erzeugen der Steuerdaten auf Grundlage der Gesamtzahnflankengeometrie (12a, 13a, 14a; 12b, 13b, 14b), wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie (12a; 12b), der Übergangsabschnittsgeometrie (14a; 14b) und der zweiten Zahnfiankengeometrie (13b) verlaufen; und
- fräsendes Bearbeiten des Werkstücks an der Werkzeugmaschine mit dem Fräswerkzeug auf Grundlage der erzeugten Steuerdaten, wobei das Fräswerkzeug sukzessive entlang der von den Bahndaten angegebenen Bearbeitungsbahnen gesteuert wird.

2. Verfahren nach Anspruch 1, **dadurch gekennzeichnet, dass** die Übergangsabschnittsgeometrie (14a; 14b) derart erzeugt wird, dass die erste Zahnflankengeometrie (12a; 12b) an einer Mehrzahl von Randpunkten (1a - 1e) der ersten Zahnflankengeometrie (12a; 12b) tangential in die Übergangsabschnittsgeometrie (14a; 14b) übergeht und die Übergangsabschnittsgeometrie (14a; 14b) an einer Mehrzahl von Randpunkten (2a - 2e) der zweiten Zahnflankengeometrie (13a, 13b) tangential in die zweite Zahnflankengeometrie (13a; 13b) übergeht.

3. Verfahren nach Anspruch 2, **dadurch gekennzeichnet, dass** die Randpunkte (1a - 1e) der ersten Zahnflankengeometrie (12a; 12b) auf einer ersten Schnittlinie zwischen der ersten Zahnflankengeometrie (12a; 12b) und einer senkrecht zur Achse des Zahnrads (10) stehenden ersten Schnittfläche festgelegt werden und die Randpunkte (2a - 2e) der zweiten Zahnflankengeometrie (13a; 13b) auf einer zweiten Schnittlinie zwischen der zweiten Zahnflankengeometrie (13a; 13b) und einer senkrecht zur Achse des Zahnrades (10) stehenden zweiten Schnittfläche festgelegt werden.

4. Verfahren nach Anspruch 3, **gekennzeichnet durch** Festlegen einer senkrecht zur Achse des Zahnrads (10) stehenden Mittelfläche der Pfeilverzahnung, wobei die erste Schnittfläche und die zweite Schnittfläche von der Mittelfläche der Pfeilverzahnung einen gleichen Abstand aufweisen und die Mittelfläche zwischen der ersten und der zweiten Schnittfläche liegt.

5. Verfahren nach zumindest einem der vorhergehenden Ansprüche, **dadurch gekennzeichnet, dass** die Übergangsabschnittsgeometrie (14a; 14b) in Zahnflankenlinienrichtung konkav geformt ist oder konvex geformt ist,

6. Verfahren nach zumindest einem der vorhergehenden Ansprüche, **dadurch gekennzeichnet, dass** die Übergangsabschnittsgeometrie (14a; 14b) einer abgerundeten Fläche, insbesondere einer Filletfläche, zwischen der ersten Zahnflankengeometrie und der zweiten Zahnflankengeometrie entspricht.

7. Verfahren nach Anspruch 6, **dadurch gekennzeichnet, dass** die Übergangsabschnittsgeometrie (14a; 14b) durch eine Mehrzahl von die erste Zahnflankengeometrie und die zweite Zahnflankengeometrie verbindenden Kreisbogensegmenten (6a - 6e) festgelegt wird, wobei
die Kreisbogensegmente (6a - 6e) der Übergangsabschnittsgeometrie (14a; 14b) auf unterschiedlichen Profilhöhen verlaufen und jedes Kreisbogensegment (6a; 6b; 6c; 6d; 6e) einen jeweiligen ersten Randpunkt (1a; 1b; 1c; 1d; 1e) der ersten Zahnflankengeometrie (12a; 12b) mit einem jeweiligen zweiten Randpunkt (2a; 2b; 2c; 2d; 2e) der zweiten Zahnflankengeometrie (13a; 13b) verbindet, wobei der jeweilige erste Randpunkt und der jeweilige zweite Randpunkt auf gleicher Profilhöhe festgelegt sind, wobei die Kreisbogensegmente (6a - 6e) an den jeweiligen Randpunkten der jeweiligen Zahnflankengeometrie tangential In die jeweilige Zahnflankengeometrie übergehen.

8. Verfahren nach zumindest einem der vorhergehenden Ansprüche, **dadurch gekennzeichnet, dass** der Schritt Erzeugen einer Übergangsabschnittsgeometrie (14a; 14b) umfasst:
- Festlegen zumindest eines ersten Randpunktes (1a; 1b; 1c; 1d; 1e) der ersten Zahnflankengeometrie (12a; 12b),
- Festlegen zumindest eines zweiten Randpunktes (2a; 2b; 2c; 2d; 2e) der zweiten Zahnfiankengeometrie (13a; 13b), wobei der erste Randpunkt und der zweite Randpunkt auf gleicher Profilhöhe der Zahnflanken festgelegt werden,
- Festlegen eines ersten Normalenvektors auf der ersten Zahnflankengeometrie in dem ersten Randpunkt,
- Festlegen eines zweiten Normalenvektors auf der zweiten Zahnflankengeometrie in dem zweiten Randpunkt,
- Festlegen eines Schnittpunkts (5a; 5b; 5c; 5d; 5e) zwischen einer ersten Geraden (3a; 3b; 3c; 3d; 3e) und einer zweiten Geraden (4a; 4b; 4c; 4d; 4e), wobei die erste Gerade durch die Richtung des ersten Normalenvektors vorgegeben ist und die zweite Gerade durch die Richtung des zweiten Normalenvektors vorgegeben Ist, und
- Festlegen eines Kreisbogensegments (6a; 6b; 6c; 6d; 6e) von dem ersten Randpunkt zu dem zweiten Randpunkt, wobei der Schnittpunkt zwischen der ersten Geraden und der zweiten Geraden Mittelpunkt des Krelsbogensegments Ist,
wobei die Übergangsabschnittsgeometrie (14a; 14b) derart erzeugt wird, dass sie das Kreisbogensegment umfasst.

9. Verfahren nach einem der vorhergehenden Ansprüche, **dadurch gekennzeichnet, dass** die erste Teilverzahnung eine erste Schrägverzahnung der Pfellverzahnung Ist und die zweite Teilverzahnung eine zweite Schrägverzahnung der Pfellverzahnung ist, wobei die erste Schrägverzahnung linkssteigend oder rechtssteigend ist und die zweite Schrägverzahnung eine der Steigung der ersten Schrägverzahnung entgegengesetzte Steigung aufweist, insbesondere mit gleichem Schrägungswinkel,

10. Verfahren nach einem der vorhergehenden Ansprüche, **dadurch gekennzeichnet, dass** die Gesamtzahnflankengeometrie (12b, 13b, 14b) eine erste Gesamtzahnflankengeometrie ist, die in Zahnflankenlinienrichtung konkav geformt ist, und der Schritt Erzeugen der Steuerdaten weiterhin umfasst:
- Festlegen einer dritten Zahnflankengeometrle (12a), die einer Geometrie einer dritten, der ersten Zahnflankengeometrie gegenüberliegenden Zahnflanke der ersten Teilverzahnung der Pfeilverzahnung entspricht,
- Festlegen einer vierten Zahnflankengeometrie (13a), die einer Geometrie einer vierten, der zweiten Zahnflankengeometrie gegenüberliegenden Zahnflanke der zweiten Teilverzahnung der Pfeilverzahnung entspricht,
- Festlegen einer zweiten Übergangsabschnittsgeometrie (14a), die einer Geometrie eines Übergangsabschnitts zwischen der dritten Zahnflanke und der vierten Zahnflanke entspricht und in Zahnflankenlinienrichtung konvex geformt ist, und
- Bestimmen zumindest einer zweiten Gesamtzahnflankengeometrie (12a, 13a, 14a), die die dritte Zahnflankengeometrie, die zweite Übergangsabschnittsgeometrie und die vierte Zahnflankengeometrie umfasst,
wobei die Steuerdaten weiterhin auf Grundlage der zweiten Gesamtzahnflankengeometrie (12a, 13a, 14a) erzeugt werden und weitere Bahndaten zum Steuern des Fräswerkzeugs der Werkzeugmaschine angeben, wobei die weiteren Bearbeitungsbahnen jeweils quer zur Profilrichtung der dritten und vierten Zahnflanke und entlang der dritten Zahnflankengeometrie, der zweiten Übergangsabschnittsgeometrie und der vierten Zahnflankengeometrie verlaufen.

11. Verfahren nach Anspruch 10, **dadurch gekennzeichnet, dass**
die erste Übergangsabschnittsgeometrie (14b) derart erzeugt wird, dass die erste Zahnflankengeometrie an einer Mehrzahl von Randpunkten (1a - 1e) der ersten Zahnflankengeometrie (12b) im Wesentlichen tangential in die erste Übergangsabschnittsgeometrie (14b) übergeht und die erste Übergangsabschnittsgeometrie (14b) an einer Mehrzahl von Randpunkten (2a - 2e) der zweiten Zahnflankengeometrie (13b) im Wesentlichen tangential In die zweite Zahnflankengeometrie (13b) übergeht, und
die zweite Übergangsabschnittsgeometrie (14a) derart erzeugt wird, dass die dritte Zahnflankengeometrie (12a) an einer Mehrzahl von Randpunkten der dritten Zahnflankengeometrie (12a) im Wesentlichen tangential in die zweite Übergangsabschnittsgeometrie (14a) übergeht und die zweite Übergangsabschnittsgeometrie (14a) an einer Mehrzahl von Randpunkten der vierten Zahnflankengeometrie (13a) im Wesentlichen tangential in die vierte Zahnflankengeometrie (13a) übergeht, wobei
die Randpunkte (1a - 1e) der ersten Zahnflankengeometrie (12b) auf einer ersten Schnittlinie zwischen der ersten Zahnflankengeometrie (12b) und einer senkrecht zur Achse des Zahnrads (10) stehenden ersten Schnittfläche festgelegt werden und die Randpunkte (2a - 2e) der zweiten Zahnflankengeometrie (13b) auf einer zweiten Schnittlinie zwischen der zweiten Zahnflankengeometrie (13b) und einer senkrecht zur Achse des Zahnrades (10) stehenden zweiten Schnittfläche festgelegt werden, und
die Randpunkte der dritten Zahnflankengeometrie (12a) auf einer dritten Schnittlinie zwischen der dritten Zahnflankengeometrie (12a) und einer senkrecht zur Achse des Zahnrads (10) stehenden dritten Schnittfläche festgelegt werden und die Randpunkte der vierten Zahnflankengeometrie (13a) auf einer vierten Schnittlinie zwischen der vierten Zahnflankengeometrie (13a) und einer senkrecht zur Achse des Zahnrades stehenden vierten Schnittfläche festgelegt werden.

12. Verfahren nach Anspruch 11, **dadurch gekennzeichnet, dass** die erste Schnittfläche und die zweite Schnittfläche einen kleineren Abstand aufweisen als die dritte Schnittfläche und die vierte Schnittfläche.

13. Verfahren zum Erzeugen von Steuerdaten zur Ausbildung einer Pfeilverzahnung auf einem Werkstück gemäß eines Herstellungsverfahrens nach zumindest einem der vorhergehenden Ansprüche durch fräsende Bearbeitung des Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, Insbesondere einem Schaftfräser, der Werkzeugmaschine auf Grundlage der Steuerdaten, umfassend;
- Festlegen einer ersten Zahnflankengeometrie (12b), die einer Geometrie einer ersten Zahnflanke einer ersten Teilverzahnung der Pfeilverzahnung entspricht,
- Festlegen einer zweiten Zahnflankengeometrie (13b), die einer Geometrie einer zweiten Zahnflanke einer zweiten Teilverzahnung der Pfeilverzahnung entspricht,
- Festlegen einer Übergangsabschnittsgeometrie (14b), die einer Geometrie eines Übergangsabschnitts zwischen den ersten und zweiten Zahnflanken entspricht,
- Bestimmen einer Gesamtzahnflankengeometrie (12b, 13b, 14b), die die erste Zahnflankengeometrie (12b), die Übergangsabschnittsgeometrie (14b) und die zweite Zahnflankengeometrie (13b) umfasst, und
- Erzeugen von Steuerdaten auf Grundlage der Gesamtzahnflankengeometrie (12b, 13b, 14b),
wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie, der Übergangsabschnittsgeometrie und der zweiten Zahnflankengeometrie verlaufen.

14. Vorrichtung zum Erzeugen von Steuerdaten zur Ausbildung einer Pfeilverzahnung auf einem Werkstück gemäß eines Herstellungsverfahrens nach zumindest einem der Ansprüche 1 bis 12 durch fräsende Bearbeitung des Werkstücks an einer zumindest 4 Achsen umfassenden, numerisch gesteuerten Werkzeugmaschine, insbesondere an einer Fräsmaschine, einer Universal-Werkzeugmaschine oder einem Bearbeitungszentrum, durch sukzessives Abfahren von Bearbeitungsbahnen relativ zu dem Werkstück mit einem Fräswerkzeug, insbesondere einem Schaftfräser, der Werkzeugmaschine auf Grundlage der Steuerdaten, mit:
- einem Geometriemodelliterungsmittel (230) zum Festiegen einer ersten Zahnflankengeometrie (12b), die einer Geometrie einer ersten Zahnflanke einer ersten Teilverzahnung der Pfeilverzahnung entspricht, zum Festlegen einer zweiten Zahnflankengeometrie (13b), die einer Geometrie einer zweiten Zahnflanke einer zweiten Teilverzahnung der Pfeilverzahnung entspricht, zum Festlegen einer Übergangsabschnittsgeometrie (14b), die einer Geometrie eines Übergangsabschnitts zwischen den ersten und zweiten Zahnflanken entspricht, und zum Bestimmen einer Gesamtzahnflankengeometrie (12b, 13b, 14b), die die erste Zahnflankengeometrie (12b), die Übergangsabschnittsgeometrie (13b) und die zweite Zahnflankengeometrie (14b) umfasst, und
- einem Steuerdatenerzeugungsmittel (240) zum Erzeugen von Steuerdaten auf Grundlage der Gesamtzahnflankengeometrie (12b, 13b, 14b),
wobei die Steuerdaten Bahndaten zum Steuern des Fräswerkzeugs der Werkzeugmaschine entlang von Bearbeitungsbahnen angeben, wobei die Bearbeitungsbahnen jeweils quer zur Profilrichtung der Zahnflanken, insbesondere auf unterschiedlichen Profilhöhen, und entlang der ersten Zahnflankengeometrie (12b), der Übergangsabschnittsgeometrie (14b) und der zweiten Zahnflankengeometrie (13b) verlaufen.

15. Numerisch gesteuerte, zumindest 4 Achsen umfassende Werkzeugmaschine, insbesondere Fräsmaschine, Universal-Werkzeugmaschine oder Bearbeitungszentrum, zum fräsenden Bearbeiten eines Werkstücks durch sukzessives Abfahren von Bearbeitungsbahnen mit einem Fräswerkzeug, Insbesondere Schaftfräser, der Werkzeugmaschine auf Grundlage von erzeugten Steuerdaten, umfassend eine Vorrichtung (200) zum Erzeugen von Steuerdaten gemäß Anspruch 14.

16. Computerprogrammprodukt, das ein computerlesbares Medium und ein darin gespeichertes Computerprogramm umfasst, wobei das Computerprogramm In der Form einer Abfolge von Zuständen gespeichert Ist, die Befehlen entspricht, die eingerichtet sind von einem Datenverarbeitungsmittel einer Datenverarbeitungseinrichtung verarbeitet zu werden, so dass Datenverarbeitungseinrichtung dazu eingerichtet Ist, die Schritte des Verfahrens nach Anspruch 13 auszuführen.

## Claims

1. A method for producing a toothed wheel (10) having a herringbone gearing by means of milling a workpiece on a numerically controlled machine tool comprising at least 4 axes, in particular a milling machine, a universal machine tool or a machining centre, by successively moving a milling cutter, in particular an end milling cutter, of the machine tool along machining paths relative to the workpiece based on control data, comprising:
- generating the control data for guiding the milling cutter relative to the workpiece, comprising:
- determining a first tooth flank geometry (12a; 12b) which corresponds to a geometry of a first tooth flank of a first partial gearing of the herringbone gearing,
- determining a second tooth flank geometry (13a; 13b) which corresponds to a geometry of a second tooth flank of a second partial gearing of the herringbone gearing,
- determining a transition section geometry (14a; 14b) which corresponds to a geometry of a transition section between the first tooth flank and the second tooth flank,
- determining an overall tooth flank geometry (12a, 13a, 14a; 12b, 13b, 14b) which comprises the first tooth flank geometry (12a; 12b), the transition section geometry (14a; 14b) and the second tooth flank geometry (13a; 13b), and
- generating the control data based on the overall tooth flank geometry (12a, 13a, 14a; 12b, 13b, 14b), the control data indicating path data for guiding the milling cutter of the machine tool along machining paths, each of the machining paths extending transversely to the profile direction of the tooth flanks, in particular at different profile heights, and along the first tooth flank geometry (12a; 12b), the transition section geometry (14a; 14b) and the second tooth flank geometry (13b); and
- milling the workpiece on the machine tool using a milling cutter based on the generated control data, the milling cutter being successively guided along the machining paths indicated by the path data.

2. The method according to claim 1, **characterized in that** the transition section geometry (14a; 14b) is produced such that at a plurality of boundary points (1a - 1e) of the first tooth flank geometry (12a; 12b) the first tooth flank geometry (12a; 12b) merges tangentially into the transition section geometry (14a; 14b) and, at a plurality of boundary points (2a - 2e) of the second tooth flank geometry (13a; 13b), the transition section geometry (14a; 14b) merges tangentially into the second tooth flank geometry (13a; 13b).

3. The method according to claim 2, **characterized In that** the boundary points (1a - 1e) of the first tooth flank geometry (12a; 12b) are determined on a first cutting path between the first tooth flank geometry (12a; 12b) and a first cut surface perpendicular to the toothed wheel (10) axis and the boundary points (2a - 2e) of the second tooth flank geometry (13a; 13b) are determined on a second cutting path between the second tooth flank geometry (13a; 13b) and a second cut surface perpendicular to the toothed wheel (10) axis.

4. The method according to claim 3, **characterized by** determining a central area of the herringbone gearing, which is perpendicular to the toothed wheel (10) axis, the first cut surface and the second cut surface having equal distance from the central area of the herringbone gearing and the central area being located between the first and second cut surfaces.

5. The method according to at least one of the preceding claims, **characterized in that** the transition section geometry (14a; 14b) has a concave shape or a convex shape in the tooth flank line direction.

6. The method according to at least one of the preceding claims, **characterized in that** in the transition section geometry (14a; 14b) corresponds to a rounded surface, in particular a fillet surface, between the first tooth flank geometry and the second tooth flank geometry.

7. The method according to claim 6, **characterized in that** the transition section geometry (14a; 14b) is determined by a plurality of circular arc segments (6a - 6e) connecting the first tooth flank geometry and the second tooth flank geometry wherein the circular arc segments (6a - 6e) of the transition section geometry (14a; 14b) extend at different profile heights and each circular arc segment (6a; 6b; 6c; 6d; 6e) connects a respective first boundary point (1a; 1b; 1c; 1d; 1e) of the first tooth flank geometry (12a; 12b) with a respective second boundary point (2a; 2b; 2c; 2d; 2e) of the second tooth flank geometry (13a; 13b), the respective first boundary point and the respective second boundary point being determined at equal profile height and the circular are segments (6a - 6e) merging tangentially into the respective tooth flank geometry at the respective boundary points of the respective tooth flank geometry.

8. The method according to at least one of the preceding claims, **characterized in that** the step of producing a transition section geometry (14a; 14b) comprises;
- determining a least one first boundary point (1a; 1b; 1c; 1d; 1e) of the first tooth flank geometry (12a; 12b),
- determining a least one second boundary point (2a; 2b; 2c; 2d; 2e) of the second tooth flank geometry (13a; 13b), the first boundary point and the second boundary point being determined at equal profile height of the tooth flanks,
- determining a first normal vector on the first tooth flank geometry in the first boundary point,
- determining a second normal vector on the second tooth flank geometry in the second boundary point,
- determining an intersection point (5a; 5b; 5c; 5d; 5e) between a first straight line (3a; 3b; 3c; 3d; 3e) and a second straight line (4a; 4b; 4c; 4d; 4e), the first straight line being predetermined by the direction of the first normal vector and the second straight line being predetermined by the direction of the second normal vector, and
- determining a circular arc segment (6a; 6b; 6c; 6d; 6e) from the first boundary point to the second boundary point, the intersection point between the first straight line and the second straight line being the centre of the circular arc segment,
- the transition section geometry (14a; 14b) being produced so as to comprise the circular arc segment.

9. The method according to any one of the preceding claims, **characterized in that** the first partial gearing is a first helical gearing of the herringbone gearing and the second partial gearing is a second helical gearing of the herringbone gearing, the first helical gearing being left-hand or right-hand and the second helical gearing having a pitch opposed to the pitch of the first helical gearing, in particular at the same helix angle.

10. The method according to any one of the preceding claims, **characterized in that** the overall tooth flank geometry (12b, 13b, 14b) is a first overall tooth flank geometry which has a concave shape in the tooth flank line direction, and the step of generating the control data further comprises:
- determining a third flank geometry (12a) which corresponds to a geometry of a third tooth flank, opposite to the first tooth flank geometry, of the first partial gearing of the herringbone gearing,
- determining a fourth tooth flank geometry (13a) which corresponds to a geometry of a fourth tooth flank, opposite to the second tooth flank geometry, of the second partial gearing of the herringbone gearing,
- determining a second transition section geometry (14a) which corresponds to a geometry of a transition section between the third tooth flank and the fourth tooth flank and has a convex shape in the tooth flank line direction, and
- determining at least one second overall tooth flank geometry (12a, 13a, 14a) which comprises the third tooth flank geometry, the second transition section geometry and the fourth tooth flank geometry,
the control data being further generated based on the second overall tooth flank geometry (12a, 13a, 14a) and indicating further path data for guiding the milling cutter of the machine tool, each of the further machining paths extending transversely to the profile direction of the third and fourth tooth flanks and along the third tooth flank geometry, the second transition section geometry and the fourth tooth flank geometry.

11. The method according to claim 10, **characterized in that**
the first transition section geometry (14b) is produced such that at a plurality of boundary points (1a - 1e) of the first tooth flank geometry (12b) the first tooth flank geometry merges substantially tangentially into the first transition section geometry (14a) and, at a plurality of boundary points (2a - 2e) of the second tooth flank geometry (13b), the first transition section geometry (14b) merges substantially tangentially into the second tooth flank geometry (13b), and
the second transition section geometry (14a) is produced such that at a plurality of boundary points of the third tooth flank geometry (12a) the third tooth flank geometry (12a) merges substantially tangentially into the second transition section geometry (14a) and, at a plurality of boundary points of the fourth tooth flank geometry (13a), the second transition section geometry (14a) merges substantially tangentially into the fourth tooth flank geometry (13a), wherein
the boundary points (1a - 1e) of the first tooth flank geometry (12b) are determined on a first cutting path between the first tooth flank geometry (12b) and a first cut surface perpendicular to the toothed wheel (10) axis, and the boundary points (2a - 2e) of the second tooth flank geometry (13b) are determined on a second cutting path between the second tooth flank geometry (13b) and a second cut surface perpendicular to the toothed wheel (10) axis, and
the boundary points of the third tooth flank geometry (12a) are determined on a third cutting path between the third tooth flank geometry (12a) and a third cut surface perpendicular to the toothed wheel (10) axis and the boundary points of the fourth tooth flank geometry (13a) are determined on a fourth cutting path between the fourth tooth flank geometry (13a) and a fourth cut surface perpendicular to the toothed wheel axis.

12. The method according to claim 11, **characterized in that** the distance between the first cut surface and the second cut surface is smaller than between the third cut surface and the fourth cut surface.

13. A method for generating control data for forming a herringbone gearing on a workpiece according to a manufacturing method as defined in at least one of the preceding claims by milling the workpiece on a numerically controlled machine tool comprising at least 4 axes, in particular a milling machine, a universal machine tool or a machining centre, by successively moving a milling cutter, in particular an end milling cutter, of the machine tool along machining paths relative to the workpiece based on the control data, comprising:
- determining a first tooth flank geometry (12b) which corresponds to a geometry of a first tooth flank of a first partial gearing of the herringbone gearing,
- determining a second tooth flank geometry (13b) which corresponds to a geometry of a second tooth flank of a second partial gearing of the herringbone gearing,
- determining a transition section geometry (14b) which corresponds to a geometry of a transition section between the first tooth flank and the second tooth flank,
- determining an overall tooth flank geometry (12b, 13b, 14b) which comprises the first tooth flank geometry (12b), the transition section geometry (14b) and the second tooth flank geometry (13b), and
- generating control data based on the overall tooth flank geometry (12b, 13b, 14b),
the control data indicating path data for guiding the milling cutter of the machine tool along machining paths, each of the machining paths extending transversely to the profile direction of the tooth flanks, in particular at different profile heights, and along the first tooth flank geometry, the transition section geometry and the second tooth flank geometry.

14. An apparatus for generating control data for forming a herringbone gearing on a workpiece according to a manufacturing method as defined in at least one of claims 1 to 12 by milling the workpiece on a numerically controlled machine tool comprising at least 4 axes, in particular on a milling machine, a universal machine tool or a machining centre, by successively moving a milling cutter, in particular an end milling cutter, of the machine tool along machining paths relative to the workpiece based on the control data, comprising:
- a geometry shaping means (230) for determining a first tooth flank geometry (12b) which corresponds to a geometry of a first tooth flank of a first partial gearing of the herringbone gearing, for determining a second tooth flank geometry (13b) which corresponds to a geometry of a second tooth flank of a second partial gearing of the herringbone gearing, for determining a transition section geometry (14b) which corresponds to a geometry of a transition section between the first and second tooth flanks, and for determining an overall tooth flank geometry (12b, 13b, 14b) which comprises the first tooth flank geometry (12b), the transition section geometry (13b) and the second tooth flank geometry (14b), and
- a control data generation means (240) for generating control data based on the overall tooth flank geometry (12b, 13b, 14b),
the control data indicating path data for guiding the milling cutter of the machine tool along machining paths, each of the machining paths extending transversely to the profile direction of the tooth flanks, in particular at different profile heights, and along the first tooth flank geometry (12b), the transition section geometry (14b) and the second tooth flank geometry (13b).

15. A numerically controlled machine tool comprising at least 4 axes, in particular a milling machine, universal machine tool or machining centre, for milling a workpiece by successively moving a milling cutter, in particular an end milling cutter, of the machine tool along machining paths based on generated control data, comprising an apparatus (200) for generating control data according to claim 14.

16. A computer program product which comprises a computer-readable medium and a computer program stored therein, wherein the computer program is stored in the form of a sequence of states which corresponds to commands adapted to be processed by a data processing means of a data processing device so that the data processing device is adapted to execute the steps according to claim 13.

## Revendications

1. Procédé de fabrication d'une roue dentée (10) comprenant une denture à chevrons, par usinage à la fraise d'une pièce sur une machine-outil à commande numérique comprenant au moins quatre axes, en particulier sur une machine à fraiser, sur une machine-outil universelle ou sur un centre d'usinage, en parcourant successivement des voies d'usinage par rapport à la pièce à usiner au moyen d'un outil de fraisage, en particulier une fraise à queue de la machine-outil, en se basant sur des données de commande, comprenant les étapes suivantes :
- on génère des données de commande destinées à commander l'outil de fraisage par rapport à la pièce à usiner, comprenant les étapes suivantes :
- on détermine une première géométrie de flanc de dent (12a ; 12b) qui correspond à une géométrie d'un premier flanc de dent d'une première denture partielle de la denture à chevrons,
- on détermine une seconde géométrie de flanc de dent (13a ; 13b) qui correspond à une géométrie d'un second flanc de dent d'une seconde denture partielle de la denture à chevrons,
- on détermine une géométrie de partie de transition (14a ; 14b) qui correspond à une géométrie d'une partie de transition entre le premier flanc de dent et le second flanc de dent,
- on définit une géométrie de flanc de dent d'ensemble (12a, 13a, 14a ; 12b, 13b, 14b) qui comprend la première géométrie de flanc de dent (12a ; 12b), la géométrie de partie de transition (14a ; 14b) et la seconde géométrie de flanc de dent (13a ; 13b), et
- on génère des données de commande en se basant sur la géométrie de flanc de dent d'ensemble (12a, 13a, 14a ; 12b, 13b, 14b), les données de commande indiquant des données de voie pour commander l'outil de fraisage de la machine-outil le long de voies d'usinage, les voies d'usinage s'étendant chacune transversalement à la direction de profil des flancs de dent, en particulier à différentes hauteurs de profil, et le long de la première géométrie de flanc de dent (12a ; 12b), de la géométrie de partie de transition (14a ; 14b) et de la seconde géométrie de flanc de dent (13b) ; et
- on usine la pièce par fraisage sur la machine-outil au moyen de l'outil de fraisage en se basant sur les données de commande générées, l'outil de fraisage étant commandé successivement le long des voies d'usinage définies par les données de voie.

2. Procédé selon la revendication 1, **caractérisé en ce que** la géométrie de partie de transition (14a ; 14b) est réalisée de telle sorte que la première géométrie de flanc de dent (12a ; 12b) se transforme tangentiellement en la géométrie de partie de transition (14a ; 14b) au niveau d'une pluralité de points marginaux (1a - 1e) de la première géométrie de flanc de dent (12a ; 12b) et que la géométrie de partie de transition (14a ; 14b) se transforme tangentiellement en la seconde géométrie de flanc de dent (13a ; 13b) au niveau d'une pluralité de points marginaux (2a - 2e) de la seconde géométrie de flanc de dent (13a ; 13b).

3. Procédé selon la revendication 2, **caractérisé en ce que** les points marginaux (1a - 1e) de la première géométrie de flanc de dent (12a ; 12b) sont fixés sur une première ligne d'intersection entre la première géométrie de flanc de dent (12a ; 12b) et une première surface de section perpendiculaire à l'axe de la roue dentée (10), et les points marginaux (2a - 2e) de la seconde géométrie de flanc de dent (13a ; 13b) sont fixés sur une seconde ligne d'intersection entre la seconde géométrie de flanc de dent (13a ; 13b) et une seconde surface de section perpendiculaire à l'axe de la roue dentée (10).

4. Procédé selon la revendication 3, **caractérisé par** la détermination d'une surface médiane de la denture à chevrons perpendiculaire à l'axe de la roue dentée (10), la première surface de section et la seconde surface de section présentant une même distance vis-à-vis de la surface médiane de la denture à chevrons, et la surface médiane étant située entre la première et la seconde surface de section.

5. Procédé selon l'une au moins des revendications précédentes, **caractérisé en ce que** la géométrie de partie de transition (14a ; 14b) est de forme concave ou de forme convexe en direction de la ligne de flanc de dent.

6. Procédé selon l'une au moins des revendications précédentes, **caractérisé en ce que** la géométrie de partie de transition (14a ; 14b) correspond à une surface arrondie, en particulier à une surface en congé (fillet), entre la première géométrie de flanc de dent et la seconde géométrie de flanc de dent.

7. Procédé selon la revendication 6, **caractérisé en ce que** la géométrie de partie de transition (14a ; 14b) est déterminée par une pluralité de segments d'arc de cercle (6a - 6e) reliant la première géométrie de flanc de dent et la seconde géométrie de flanc de dent, les segments d'arc de cercle (6a - 6e) de la géométrie de partie de transition (14a ; 14b) s'étendent à différentes hauteurs de profil, et chaque segment d'arc de cercle (6a ; 6b ; 6c ; 6d ; 6e) reliant un premier point marginal respectif (1a; 1b; 1c ; 1d ; 1 e) de la première géométrie de flanc de dent (12a ; 12b) à un second point marginal respectif (2a ; 2b ; 2c ; 2d ; 2e) de la seconde géométrie de flanc de dent (13a ; 13b), le premier point marginal respectif et le second point marginal respectif étant fixés à la même hauteur de profil, les segments d'arc de cercle (6a - 6e) se transformant tangentiellement en la géométrie de flanc de dent respective aux des points marginaux respectifs de la géométrie de flanc de dent respective.

8. Procédé selon l'une au moins des revendications précédentes, **caractérisé en ce que** l'étape de la génération d'une géométrie de partie de transition (14a ; 14b) comprend les étapes suivantes :
- on détermine au moins un premier point marginal (1a ; 1b ; 1c ; 1d ; 1e) de la première géométrie de flanc de dent (12a ; 12b),
- on détermine au moins un second point marginal (2a ; 2b ; 2c ; 2d ; 2e) de la seconde géométrie de flanc de dent (13a ; 13b), le premier point marginal et le second point marginal étant fixés à la même hauteur de profil des flancs de dent,
- on détermine un premier vecteur normal sur la première géométrie de flanc de dent au premier point marginal,
- on détermine un second vecteur normal sur la seconde géométrie de flanc de dent au second point marginal,
- on détermine un point d'intersection (5a ; 5b ; 5c ; 5d ; 5e) entre une première droite (3a ; 3b ; 3c ; 3d ; 3e) et une seconde droite (4a ; 4b ; 4c ; 4d ; 4e), la première droite étant prédéterminée par la direction du premier vecteur normal et la seconde droite étant prédéterminée par la direction du second vecteur normal, et
- on détermine un segment d'arc de cercle (6a ; 6b ; 6c ; 6d ; 6e) allant du premier point marginal au second point marginal, le point d'intersection entre la première droite et la seconde droite étant le centre du segment d'arc de cercle,
la géométrie de partie de transition (14a ; 14b) étant générée de manière à comprendre le segment d'arc de cercle.

9. Procédé selon l'une des revendications précédentes, **caractérisé en ce que** la première denture partielle est une première denture hélicoïdale de la denture à chevrons et la seconde denture partielle est une seconde denture hélicoïdale de la denture à chevrons, la première denture hélicoïdale étant une denture à gauche ou une denture à droite, et la seconde denture hélicoïdale présentant un pas opposé à celui de la première denture hélicoïdale, en particulier au même angle d'hélice.

10. Procédé selon l'une des revendications précédentes, **caractérisé en ce que** la géométrie de flanc de dent d'ensemble (12b, 13b, 14b) est une première géométrie de flanc de dent d'ensemble qui est de forme concave en direction de la ligne de flanc de dent, et l'étape de la génération des données de commande comprend en outre les étapes suivantes :
- on détermine une troisième géométrie de flanc de dent (12a) qui correspond à une géométrie d'un troisième flanc de dent de la première denture partielle de la denture à chevrons, opposé à la première géométrie de flanc de dent,
- on détermine une quatrième géométrie de flanc de dent (13a) qui correspond à une géométrie d'un quatrième flanc de dent de la seconde denture partielle de la denture à chevrons, opposé à la seconde géométrie de flanc de dent,
- on détermine une seconde géométrie de partie de transition (14a) qui correspond à une géométrie d'une partie de transition entre le troisième flanc de dent et le quatrième flanc de dent et qui est de forme convexe en direction de la ligne de flanc, et
- on définit au moins une seconde géométrie de flanc de dent d'ensemble (12a, 13a, 14a) qui comprend la troisième géométrie de flanc de dent, la seconde géométrie de partie de transition et la quatrième géométrie de flanc de dent,
les données de commande étant générées en se basant sur la seconde géométrie de flanc de dent d'ensemble (12a, 13a, 14a) et indiquant d'autres données de voie pour commander l'outil de fraisage de la machine-outil, les autres voies d'usinage s'étendant chacune transversalement à la direction du profil du troisième et du quatrième flanc de dent et le long de la troisième géométrie de flanc de dent, de la seconde géométrie de partie de transition et de la quatrième géométrie de flanc de dent.

11. Procédé selon la revendication 10, **caractérisé en ce que**
la première géométrie de partie de transition (14b) est générée de telle sorte que la première géométrie de flanc de dent se transforme sensiblement tangentiellement en la première géométrie de partie de transition (14b) au niveau d'une pluralité de points marginaux (1a - 1e) de la première géométrie de flanc de dent (12b), et que la première géométrie de partie de transition (14b) se transforme sensiblement tangentiellement en la seconde géométrie de flanc de dent (13b) au niveau d'une pluralité de points marginaux (2a - 2e) de la seconde géométrie de flanc de dent (13b), et
la seconde géométrie de partie de transition (14a) est générée de telle sorte que la troisième géométrie de flanc de dent (12a) se transforme sensiblement tangentiellement en la secondé géométrie de partie de transition (14a) au niveau d'une pluralité de points marginaux de la troisième géométrie de flanc de dent (12a), et que la seconde géométrie de partie de transition (14a) se transforme sensiblement tangentiellement en la quatrième géométrie de flanc de dent (13a) au niveau d'une pluralité de points marginaux de la quatrième géométrie de flanc de dent (13a),
les points marginaux (1a - 1e) de la première géométrie de flanc de dent (12b) étant fixés sur une première ligne d'intersection entre la première géométrie de flanc de dent (12b) et une première surface de section perpendiculaire à l'axe de la roue dentée (10), et les points marginaux (2a - 2e) de la seconde géométrie de flanc de dent (13b) étant fixés sur une seconde ligne d'intersection entre la seconde géométrie de flanc de dent (13b) et une seconde surface de section perpendiculaire à l'axe de la roue dentée (10), et
les points marginaux de la troisième géométrie de flanc de dent (12a) étant fixés sur une troisième ligne d'intersection entre la troisième géométrie de flanc de dent (12a) et une troisième surface de section perpendiculaire à l'axe de la roue dentée (10), et les points marginaux de la quatrième géométrie de flanc de dent (13a) étant fixés sur une quatrième ligne d'intersection entre la quatrième géométrie de flanc de dent (13a) et une quatrième surface de section perpendiculaire à l'axe de la roue dentée.

12. Procédé selon la revendication 11, **caractérisé en ce que** la première surface de section et la seconde surface de section présentent une distance inférieure à celle de la troisième surface de section et de la quatrième surface de section.

13. Procédé pour générer des données de commande destinées à réaliser une denture à chevrons sur une pièce à usiner selon le procédé de fabrication selon l'une au moins des revendications précédentes par usinage à la fraise de la pièce sur une machine-outil à commande numérique comprenant au moins quatre axes, en particulier sur une machine à fraiser, sur une machine-outil universelle ou sur un centre d'usinage, en parcourant successivement des voies d'usinage par rapport à la pièce à usiner au moyen d'un outil de fraisage, en particulier une fraise à queue de la machine-outil, en se basant sur les données de commande, comprenant les étapes suivantes :
- on détermine une première géométrie de flanc de dent (12b) qui correspond à une géométrie d'un premier flanc de dent d'une première denture partielle de la denture à chevrons,
- on détermine une seconde géométrie de flanc de dent (13b) qui correspond à une géométrie d'un second flanc de dent d'une seconde denture partielle de la denture à chevrons,
- on détermine une géométrie de partie de transition (14b) qui correspond à une géométrie d'une partie de transition entre le premier flanc de dent et le second flanc de dent,
- on définit une géométrie de flanc de dent d'ensemble (12b, 13b, 14b) qui comprend la première géométrie de flanc de dent (12b), la géométrie de partie de transition (14b) et la seconde géométrie de flanc de dent (13b), et
- on génère des données de commande en se basant sur la géométrie de flanc de dent d'ensemble (12b, 13b, 14b),
les données de commande indiquant des données de voie pour commander l'outil de fraisage de la machine-outil le long de voies d'usinage, les voies d'usinage s'étendant chacune transversalement à la direction de profil des flancs de dent, en particulier à différentes hauteurs de profil, et le long de la première géométrie de flanc de dent, de la géométrie de partie de transition et de la seconde géométrie de flanc de dent.

14. Dispositif pour générer des données de commande destinées à réaliser une denture à chevrons sur une pièce à usiner selon un procédé de fabrication selon l'une au moins des revendications 1 à 12 par usinage à la fraise de la pièce sur une machine-outil à commande numérique comprenant au moins quatre axes, en particulier sur une machine à fraiser, sur une machine-outil universelle ou sur un centre d'usinage, en parcourant successivement des voies d'usinage par rapport à la pièce à usiner au moyen d'un outil de fraisage, en particulier une fraise à queue de la machine-outil, en se basant sur les données de commande, comportant :
- un moyen de modélisation de géométrie (230) pour déterminer une première géométrie de flanc de dent (12b) qui correspond à une géométrie d'un premier flanc de dent d'une première denture partielle de la denture à chevrons, pour déterminer une seconde géométrie de flanc de dent (13b) qui correspond à une géométrie d'un second flanc de dent d'une seconde denture partielle de la denture à chevrons, pour déterminer une géométrie de partie de transition (14b) qui correspond à une géométrie d'une partie de transition entre le premier flanc de dent et le second flanc de dent, et pour définir une géométrie de flanc de dent d'ensemble (12b, 13b, 14b) qui comprend la première géométrie de flanc de dent (12b), la géométrie de partie de transition (13b) et la seconde géométrie de flanc de dent (14b), et
- un moyen de génération de données de commande (240) pour générer des données de commande en se basant sur la géométrie de flanc de dent d'ensemble (12b, 13b, 14b),
les données de commande indiquant des données de voie pour commander l'outil de fraisage de la machine-outil le long de voies d'usinage, les voies d'usinage s'étendant chacune transversalement à la direction de profil des flancs de dent, en particulier à différentes hauteurs de profil, et le long de la première géométrie de flanc de dent (12b), de la géométrie de partie de transition (14b) et de la seconde géométrie de flanc de dent (13b).

15. Machine-outil à commande numérique comprenant au moins quatre axes, en particulier machine à fraiser, machine-outil universelle ou centre d'usinage, pour l'usinage d'une pièce par fraisage en parcourant successivement des voies d'usinage au moyen d'un outil de fraisage, en particulier une fraise à queue de la machine-outil, en se basant sur les données de commande, comportant un dispositif (200) pour générer des données de commande selon la revendication 14.

16. Produit de programme d'ordinateur qui comprend un support lisible à l'ordinateur et un programme d'ordinateur mémorisé dans celui-ci, le programme d'ordinateur étant mémorisé sous la forme d'une succession d'états correspondant à des ordres prévus pour être traités par un moyen de traitement de données d'un dispositif de traitement de données, de telle sorte que le dispositif de traitement de données est prévu pour réaliser les étapes du procédé selon la revendication 13.
